# EUROPEAN PATENT APPLICATION

(11) **EP 1 679 859 A1**
(43) Date of publication of application: **12.07.2006**
(21) Application number: 04817423.9
(22) Date of filing: 29.10.2004
(51) Int. Cl.: H04M 1/02

(54) **CONNECTION DEVICE, SMALL-SIZED ELECTRONIC APPARATUS WITH THE SAME, AND FOLDING PORTABLE TERMINAL DEVICE**

(30) Priority: 31.10.2003 JP 2003371759; 28.04.2004 JP 2004133463; 28.04.2004 JP 2004133462
(71) Applicant: MATSUSHITA ELECTRIC INDUSTRIAL CO., LTD., Kadoma-shi, Osaka 571-8501 (JP)
(72) Inventor: SATO, Noriyoshi, Matsuhita Electr. Ind. Co,Ltd, Chuo-ku,Osaka-shi, Osaka 540-6319 (JP); AKASHI, Arisa, Matsuhita Electr. Ind. Co,Ltd, Chuo-ku,Osaka-shi, Osaka 540-6319 (JP); OKAMOTO, Keiji, Matsuhita Electr. Ind. Co,Ltd, Chuo-ku,Osaka-shi, Osaka 540-6319 (JP); NONOMURA, Mao, Matsuhita Electr. Ind. Co,Ltd, Chuo-ku,Osaka-shi, Osaka 540-6319 (JP)
(74) Representative: Grünecker, Kinkeldey, Stockmair & Schwanhäusser Anwaltssozietät
(86) International application number: PCT/JP2004/016131
(87) International publication number: WO 2005/043869

(57) **Abstract**

The present invention provides a connecting device which has a connecting portion capable of rotatably connecting two housing portions without protruding from the two housing portions and can stably keep the housing portions arranged so as to face each other.

The connecting device includes; first and third connecting members 31 and 33 which have flexibility and foldably connects an upper housing portion 1 and a lower housing portion 2 with a predetermined gap interposed therebetween; and a second connecting member 32 which has enough restoring force and rigidity to restore a bent state to an unbent state and is curved in an arc shape in sectional view such that a concave portion of the arc is oriented in a direction where the upper and lower housing portions are folded.

## Description

### Technical Field

The present invention relates to a connecting device for foldably connecting two housing portions, and to a small electronic apparatus and a folding portable terminal apparatus having the same.

### Background Art

In recent years, various types of mobile phones have been developed and used. For example, the mobile phones include a bar-type mobile phone and a folder-type mobile phone which can be folded through a hinge portion.

Such a folder-type mobile phone includes an upper housing having a display unit provided therein, a lower housing portion having an operating unit provided therein, and a hinge portion which foldably connects the upper and lower housing portions such that the display unit and the operating unit face each other. This structure causes the upper housing portion to be rotated on the central axis of the hinge portion relative to the lower housing portion. The hinge portion has a substantially cylindrical shape, and the outer diameter of the hinge portion is generally larger than the thicknesses of the upper and lower housing portions having the display unit and the operating unit, respectively. Therefore, the hinge portion protrudes from the upper surfaces of the upper and lower housing portions (for example, see Patent Document 1).

In the folder-type portable terminal apparatus having the above-mentioned structure, for example, when a user having a long fingernail operates the operating unit, the tip of the fingernail may come into contact with the hinge portion, which makes it difficult for the user to easily operate the operating unit. As a means of solving the inconvenience in use, a structure for ensuring a predetermined distance between the operating unit and the hinge portion has been considered. When the distance increases, the overall length from the upper housing portion to the lower housing portion also increases, resulting in an increase in the size of a portable terminal apparatus.

Therefore, there has been proposed a mobile phone (hereinafter, referred to as a 'folding mobile phone') in which a connecting device for connecting the upper housing portion having the display unit therein and the lower housing portion having the operating unit is formed of a bendable strip member having a thickness smaller than the thicknesses of the upper and lower housing portions (see Patent Document 2).
Patent Document 1: JP-A-2002-111812 (Figs. 1 and 2)
Patent Document 2: Japanese Design Registration No. 1161572

### Disclosure of the Invention

### Problem to be Solved by the Invention

However, in the folding mobile phone disclosed in Patent document 2, the upper and lower housing portions are connected to each other by a thin hinge portion. Therefore, in general, the hinge portion is apt to have weak strength, and when a housing composed of the upper and lower housing portions is unfolded, the upper housing portion is apt to rock or sway.

Further, Patent Document 2 does not disclose a technical means for reliably and stably holding the upper housing portion when a user holds the lower housing portion having the operating unit provided therein. Therefore, the upper housing portion in an unstable state makes it difficult for the user to easily see information displayed on the display unit, such as time information or information on the reception of a phone call. In addition, the rocking transmitted from the upper housing portion causes the lower housing portion to be unstable. As a result, when the user performs mail communication, the unstable state of the lower housing portion makes it difficult for the user to input information, such as characters, to the folding mobile phone.

Furthermore, the detailed connecting structure of the hinge portion for connecting the upper housing portion and the lower housing portion is not disclosed in the folding mobile phone described in Patent Document 2, and thus it is difficult to actually manufacture the folding mobile phone.
The upper housing portion and the lower housing portion are electrically connected to each other by a flexible wiring member, such as a flexible printer board. However, when the connecting portion is twisted, the flexible wiring member is also twisted. Therefore, when excessively strong force is applied thereto, the flexible wiring member may be broken. Thus, it is necessary to prevent the breaking of the flexible wiring member.

The present invention is made in view of the above-mentioned problems, and it is an object of the invention to provide a connecting device which has a connecting portion capable of rotatably connecting two housing portions without protruding from the two housing portions and can stably keep the housing portions arranged so as to face each other and a small electronic apparatus having the same. In addition, it is another object of the invention to provide a folding portable terminal apparatus not having the above-mentioned problems raised when realizing the folding mobile phone described in Patent Document 2 and having the following advantages: first, the connecting portion can foldably connect the two housing portions without protruding from the two housing portions; second, it is possible to improve the durability of a wiring member integrated into the connecting portion; and third, it is possible to reliably keep the folding mobile phone unfolded.

### Means for Solving the Problems

According to an aspect of the invention a connecting device includes: a sheet-shaped member having flexibility on which two housing portions are fixed at a predetermined gap; and a bendable member which has enough restoring force and rigidity to restore a bent state to an unbent state and is attached on the sheet-shaped member so as to be laid across the two housing portions.

According to this structure, the connecting device can foldably connect two housing portions without protruding from the two housing portions, and it is possible to stably keep the two housing portions unfolded.

Further, in the connecting device according to this aspect, it is preferable that the bendable member be a thin plate having an arc shape in sectional view.

According to this structure, the upper and lower housing portions can be arranged so as to face each other by simply bending the bendable member toward the center of the arc. In addition, in this case, since plastic deformation does not occur in the connecting portion, it is possible to prevent the damage of the connecting portion due to repeatedly bending operations.

In the connecting device according to this aspect, it is preferable that the bendable member be attached to the two housing portions, with a concave portion thereof oriented in a direction where the two housing portions are folded.

According to this structure, it is possible to fold the two housing portions such that the opposing surfaces thereof face each other by simply bending the connecting portion and to prevent the two housing portions from being bent back in a direction opposite to the folding direction.

In the connecting device according to this aspect, preferably, the sheet-shaped member has a folding force generating means for generating folding force to hold the folded state of the housing portions at a substantially central region thereof corresponding to the gap between the two housing portions.

According to this structure, when the two housing portions are a folded state, the two housing portions do not return to the previous unfolded state due to careless handling although they are held in a user's hand.
Therefore, it is possible to improve the stability of posture when a folding mobile phone is not used.

In the connecting device according to this aspect, preferably, the sheet-shaped member includes a stopper that is bent to temporarily hold the folded state of the two housing portions.

According to this structure, if the folded state is maintained by only the weight of the upper or lower housing portion, there is a fear that the housing portions may return to the unfolded state due to a certain factor. However, the stopper makes it possible to prevent the folded state of the housing portions from returning to the unfolded state, thereby preventing a switch from being turned on.

Further, according to another aspect of the invention, a small electronic apparatus includes two housing portions; and the above-mentioned connecting device that foldably connects the two housing portions.

According to this structure, in various types of small folding electronic apparatuses each having two housing portions, one having a display unit (for example, an LCD) provided therein and the other having an operating unit (for example, keys) provided therein, such as mobile phones, PDAs, electronic dictionaries, and portable personal computers having a light weight, two housing portions can be foldably connected to each other by the connecting device according to the invention.
In this way, it is possible to further reduce the thickness and weight of a small electronic apparatus, and to mount a cover formed of various types of materials to the small electronic apparatus. In particular, it is possible to replaceably mount a cover having a colorful pattern thereon to the small electronic apparatus according to user's preference.

Further, in the above-mentioned structure, preferably the small electronic apparatus further includes a display unit that is provided in one of the two housing portions; and an operating unit that is provided in the other housing portion. When the two housing portions are folded, the display unit and the operating unit are arranged opposite to each other.

According to this structure, the following advantages are obtained. First, when a user having a long fingernail operates the operating unit in the unfolded state of the two housing portions, it is possible to prevent the tip of the fingernail from coming into contact with the connecting portion, which makes it possible for the user to operate a folding mobile phone without any hindrance. Second, when the user operates the folding mobile phone while seeing the display unit in the unfolded state of the two housing portions, the position of the display unit facing the user (for example, the relative position of the one housing portion with respect to the other housing portion) does not vary, which makes it possible to stably keep the unfolded state. Third, it is possible to stably change the unfolded state of the two housing portions to a folded state by adjusting, for example, the rigidity of the bendable member and using a bendable member having a proper sectional secondary moment or Young's modulus. In addition, it is possible to prevent the two housing portions in the stable unfolded state from being bent back.
According to yet another aspect of the invention, a folding portable terminal apparatus includes: a connecting member that has flexibility and connects two housing portions with a predetermined gap interposed therebetween; a bendable member which has enough restoring force and rigidity to restore a bent state to an unbent state and is attached so as to be laid across the two housing portions; and a flexible wiring member which electrically connects the two housing portions. In this apparatus, the bendable member and the flexible wiring member overlap each other at the position of the connecting member.

According to this structure, the following advantages are obtained. First, it is possible to foldably connect two housing portions without providing a hinge portion protruding from the two housing portions. Therefore, even when a user having a long fingernail operates the operating unit in the unfolded state of the two housing portions, it is possible to prevent the tip of the fingernail from being caught in the connecting portion, which makes it possible for the user to operate a folding mobile phone without any hindrance.
Second, it is possible to stably keep the housing portions unfolded. Third, even when force is applied on the housing portions in the unfolded state, in a direction where the housing portions are separated from each other, a gap therebetween does not vary. Fourth, when torsion is applied to the unfolded housing portions, it is possible to prevent tensile stress from being applied to the flexible wiring member.

Furthermore, in the folding portable terminal apparatus according this aspect, it is preferable that the bendable member have a curved portion having a concave shape in sectional view.

According to this structure, the bendable member, which is a strip-shaped member having a small occupied area and a small thickness, can stably maintain the unfolded state of the two housing portions. Therefore, it is possible to perform various operations in a stable state and thus prevent operationality from being lowered.

Further, in the folding portable terminal apparatus according to this aspect, it is preferable that the flexible wiring member be arranged on the concave side of the curved portion.

According to this structure, it is possible to reduce the thickness of the folding portable terminal apparatus
when the bendable member overlaps the flexible wiring member.

Furthermore, in the folding portable terminal apparatus according to this aspect, it is preferable that the flexible wiring member be arranged on the convex side of the curved portion.

According to this structure, it is possible to widen the width of the flexible wiring member.

According to still another aspect of the invention, a folding portable terminal apparatus includes: a connecting member that has flexibility and connects two housing portions with a predetermined gap interposed therebetween; a permanent magnet which is provided at one end of one of the two housing portions facing the other housing portion; and a Hall element which detects the magnetic field of the permanent magnet and is provided at one end of the other housing portion facing the one housing portion so as to opposite to the permanent magnet when the two housing portions are arranged to face each other.

According to this structure, the permanent magnet and the Hall element for detecting the folding or unfolding state of the two housing portions are provided at ends of the housing portions close to each other. Therefore, when one of the two housing portions deviates from the other housing portion in a direction perpendicular to the folding or unfolding direction, the positional deviation between permanent magnet and the Hall element is reduced to the minimum. Therefore, when the two housing portions deviate from each other in a direction perpendicular to the folding or unfolding direction, it is possible to prevent the permanent magnet and the Hall element from determining that the two housing portions are in the unfolded state.

According to still yet another aspect of the invention, a folding portable terminal apparatus includes a fashion cover that covers outer surfaces of two housing portions and a connecting portion for foldably connecting two housing portions and is freely replaceable. In the apparatus, screw receiving portions are provided so as to protrude from the inner surface of a portion of the fashion cover covering one of the two housing portions, and a plurality of engaging claws are arranged on the inner surface of another portion of the fashion cover covering the other housing portion of the two housing portions such that leading ends thereof face in the opposite direction of the one housing portion. In addition, grappling claws engaged with the engaging claws are provided on the other housing portion so as to correspond to the engaging claws, and after the screw receiving portion are screwed to the one housing portion, the fashion cover is relatively extended to the other housing portion to engage the engaging claws with the grappling claws, thereby mounting the fashion cover.

According to this structure, half the fashion cover is fixed to one of the two housing portions by fastening screws into the screw receiving portions, and the other half of the fashion cover is fixed to the other housing portion by extending the fashion cover relative to the housing portion and by engaging the engaging claws with the grappling claws provided on the other housing portion. Therefore, it is possible to easily attach or detach the fashion cover to or from the two housing portions. Here, the term 'relative extension' includes pulling the fashion cover so as to be extended and bending back the two housing portions at an angle larger than 180° to make the length of the fashion cover larger than that of the two housing portions.

According to yet still another aspect of the invention, a folding portable terminal apparatus includes a fashion cover that covers outer surfaces of two housing portions and a connecting portion for foldably connecting the two housing portions and is freely replaceable. In the apparatus, the fashion cover includes: a base member which has a size larger than the two housing portions connected to each other by the connecting portion; and an integument which covers at least an outer surface of the base member. The base member has an edge winding portion that protrudes from the edge of the two housing portions to the outside, and the edge winding portion is deformable so as to be inclined toward the two housing portions.

According to this structure, the edge winding portion protruding from the two housing portions to the outside can be deformed so as to be bent toward the two housing portions. Therefore, when a user holds one of or both the two housing portions in his or her hand, the edge winding portion is deformed inward. Thus, the user can hold the two housing portions without coming into direct contact with the sides of the two housing portions, and thus the soft fashion cover can improve the touch of a portable terminal apparatus.

According to still yet another aspect of the invention, a folding portable terminal apparatus includes a fashion cover that covers outer surfaces of two housing portions and a connecting portion for foldably connecting two housing portions and is freely replaceable. In this apparatus, the fashion cover includes: a belt member which is provided at one end of an outer surface of the fashion cover; a first metal member which is provided at a leading end of the belt member; a second metal member which is provided at the other end of the outer surface of the fashion cover and engages with the first metal member; and a permanent magnet which is provided on at least one of the first and second metal members to magnetically couple the first and second metal members. In addition, the first metal member and the second metal member have concave and convex portions engaged with each other.

According to this structure, since the belt member is attached to the outside of the fashion cover, it is possible to reliably keep the two housing portions unfolded. In this case, the concave and convex portions are provided on the leading end of the belt member and the outer surface of the fashion cover corresponding to the leading end of the belt member, respectively, such that they are engaged with each other. In addition, the first metal member and the second metal member coupled to each other by the permanent magnet are provided. Thus, it is possible to reliably and easily prevent the two housing portions from being unfolded by using the belt member.

According to yet still another aspect of the invention, a folding portable terminal apparatus includes: a connecting member which has flexibility and connects two housing portions with a predetermined gap interposed therebetween; a bendable member which has enough restoring force and rigidity to restore a bent state to an unbent state and is attached so as to be laid across the two housing portions; and a base member which has an integument on a surface thereof. In this apparatus, the base member is mounted to the two housing portions, with a rear surface thereof separated from the connecting member.

According to this structure, the following advantages are obtained. First, it is possible to foldably connect two housing portions without providing a hinge portion protruding from the two housing portions. Therefore, even when a user having a long fingernail operates the operating unit in the unfolded state of the two housing portions, it is possible to prevent the tip of the fingernail from being caught in the connecting portion, which makes it possible for the user to operate a folding mobile phone without any hindrance. Second, it is possible to stably keep the housing portions unfolded. Third, even when force is applied on the housing portions in the unfolded state, in a direction where the housing portions are separated from each other, a gap therebetween does not vary. In addition, it is possible to make the base member having an integument thereon operatively associated with and follow the folding or unfolding of the housing portions.

In this way, it is possible to further reduce the thickness and weight of a small electronic apparatus and to mount a cover formed of various materials (for example, leather or cotton) to a connecting device of the small electronic apparatus. In particular, it is possible to replaceably mount a cover having a colorful pattern thereon to the small electronic apparatus according to user's preference.

### Effects of the Invention

According to the present invention, it is possible to provide a connecting device not having a connecting portion protruding from one surface of a member having two housing portions fixed thereon and capable of stably keeping the two housing portions unfolded at a predetermined angle. In particular, for example, in a folding mobile phone having this connecting device as a hinge portion thereof, even when a user views a display unit in the unfolded state of the folding mobile phone while walking, the mobile phone is not spontaneously folded, does not rock, and is not bent back in the unfolding direction (the mobile phone is not further bent in the unfolding direction thereof). Therefore, it is possible to easily read mail, and to get rid of inconvenience in inputting character information to the operating unit, which prevents operationality from being lowered.

Further, the invention can provide a folding portable terminal apparatus not having a connecting portion protruding from one surface of a member having two housing portions fixed thereon and capable of stably keeping the two housing portions unfolded at a predetermined angle. In particular, for example, even when a user views a display unit in the unfolded state of the folding portable terminal apparatus while walking, the folding portable terminal apparatus is not spontaneously folded, does not rock, and is not bent back in the unfolding direction (the mobile phone is not further bent in the unfolding direction thereof). Therefore, it is possible to easily read mail, and to get rid of inconvenience in inputting character information to the operating unit, which prevents operationality from being lowered.

In the unfolded state of two housing portions, when torsion acts on the unfolded housing portions, it is possible to prevent tensile stress from being applied to the flexible wiring member. Therefore, even when the flexible wiring member is twisted, the breaking of the flexible wiring member does not occur.

The bendable member, which is a strip-shaped member having a small occupied area and a small thickness, can stably maintain the unfolded state of the two housing portions. Therefore, it is possible to perform various operations in a stable state and thus prevent operationality from being lowered.

Further, the invention can provide a folding portable terminal apparatus not having a connecting portion protruding from one surface of a member having two housing portions fixed thereon and capable of stably keeping the two housing portions unfolded at a predetermined angle. In particular, for example, even when a user views a display unit in the unfolded state of the folding portable terminal apparatus while walking, the folding portable terminal apparatus is not spontaneously folded, does not rock, and is not bent back in the unfolding direction (the mobile phone is not further bent in the unfolding direction thereof). Therefore, it is possible to easily read mail, and to get rid of inconvenience in inputting character information to the operating unit, which prevents operationality from being lowered.

Furthermore, since an appearance portion formed of a material, such as a natural fiber, a synthetic fiber, or leather, is used as an integument of a folding portable terminal apparatus and the inner surface of a base member having an outer surface covered with the integument is mounted to a housing, it is possible to mount the base member to the housing regardless of the kind of a material. Therefore, the unity of the housing is improved, which makes it possible to improve fashionability. Thus, it is possible to provide a folding portable terminal apparatus having color, pattern, and material suitable for user's preference.

### Brief Description of the Drawings

Fig. 1 is a perspective view illustrating the outer appearance of a folding mobile phone according to an embodiment of the invention.
Fig. 2 is an exploded perspective view of Fig. 1.
Fig. 3A is a diagram illustrating a main body portion and a connecting device provided therein in the unfolded state of the folding mobile phone according to the invention.
Fig. 3B is a diagram illustrating the folded state of the main body portion of the folding mobile phone.
Fig. 4 is a central cross-sectional view when the folding mobile phone according to the invention is unfolded.
Fig. 5 is a central cross-sectional view when the folding mobile phone according to the invention is folded.
Fig. 6 is a block diagram illustrating electrical structure of the main body portion of the folding mobile phone according to the invention.
Fig. 7 is a perspective view illustrating a state when a fashion cover is being mounted to the main body portion of the folding mobile phone according to the invention shown in Fig. 1.
Fig. 8 is a perspective view illustrating a state immediately before the fashion cover is completely mounted to the main body portion of the folding mobile phone according to the invention shown in Fig. 1.
Fig. 9 is a perspective view illustrating the outer appearance of a folding mobile phone according to another embodiment of the invention.
Fig. 10 is an exploded perspective view of Fig. 1.
Fig. 11 is a perspective view illustrating a main body portion of the folding mobile phone shown in Fig. 1, as viewed from the rear surface thereof.
Fig. 12A is a diagram illustrating a main body portion and a connecting device provided therein in the unfolded state of the folding mobile phone according to the invention.
Fig. 12B is a diagram illustrating the folded state of the main body portion of the folding mobile phone.
Fig. 13 is a central cross-sectional view when the folding mobile phone according to the invention is unfolded.
Fig. 14 is a central cross-sectional view when the folding mobile phone according to the invention is folded.
Fig. 15 is a transverse sectional view illustrating a lower housing portion of the folding mobile phone according to the invention.
Fig. 16 is a block diagram illustrating electrical structure of the main body portion of the folding mobile phone according to the invention.
Fig. 17A is a front view illustrating the state of a second connecting member and a flexible wiring member when an upper housing portion deviates from the lower housing portion.
Fig. 17B is a diagram illustrating a state in which the flexible wiring member is arranged on the right side of the second connecting member (two members do not overlap each other).
Fig. 18A is a diagram illustrating the folded state of the main body portion.
Fig. 18B is a right side view of Fig. 18A.
Fig. 19 is a diagram illustrating the upper housing portion deviating from the lower housing portion in the X direction by ΔX.
Fig. 20 is a diagram illustrating a state in which the upper housing portion pivots on a center O with respect to the lower housing portion in the P direction by ΔP in the folded state of the folding mobile phone.
Fig. 21 is a diagram illustrating the folding mobile phone folded such that a very small clearance is formed between leading ends of the upper and lower housing portions.
Fig. 22 is a perspective view illustrating an aspect of the second connecting member being screwed to bosses of the first and second housing portions.
Fig. 23 is a diagram illustrating the bosses each having a spherical leading end.
Fig. 24 is a diagram illustrating contact portions between the leading ends of the basses and a curved portion of the second connecting member.
Fig. 25 is a diagram illustrating an R portion provided in the contact portion between the leading end of the bass and the curved portion of the second connecting member.

### Best Mode for Carrying Out the Invention

Hereinafter, preferred embodiments of the invention will be described in detail with reference to the accompanying drawings. As a small electronic apparatus of the invention, a folding mobile phone, which is a kind of folder-type mobile phone, will be described.

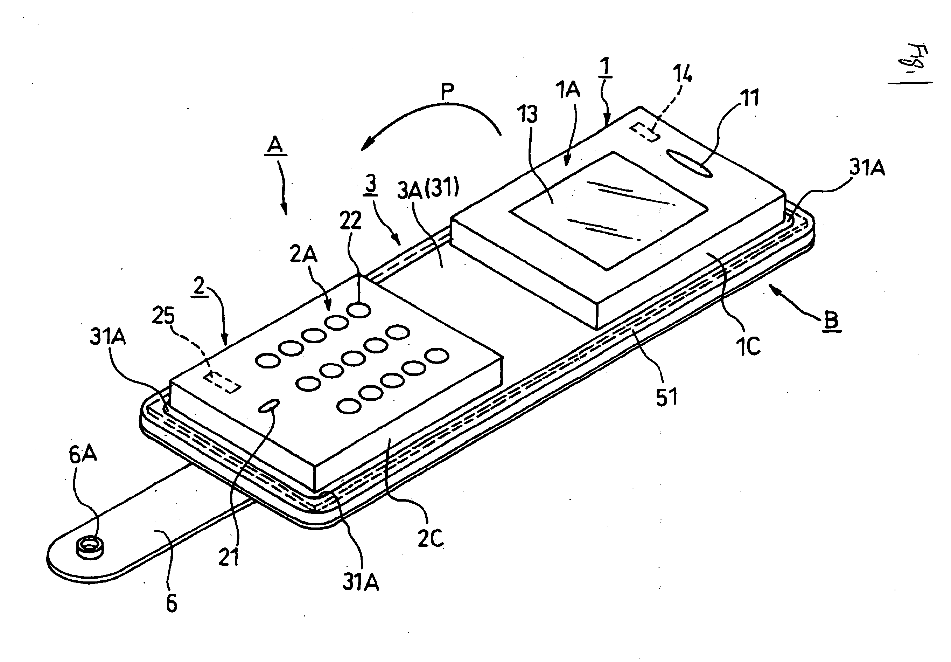

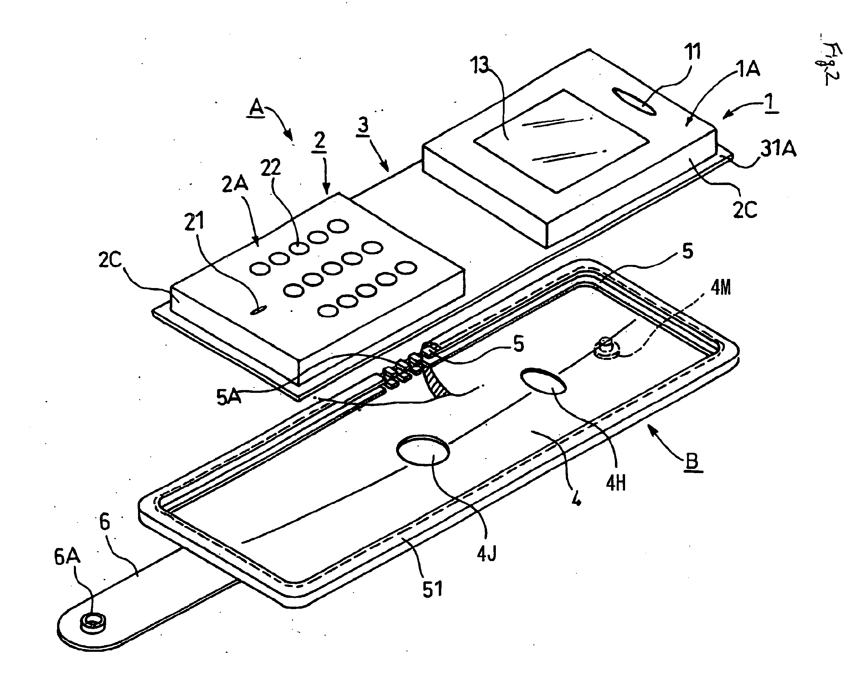

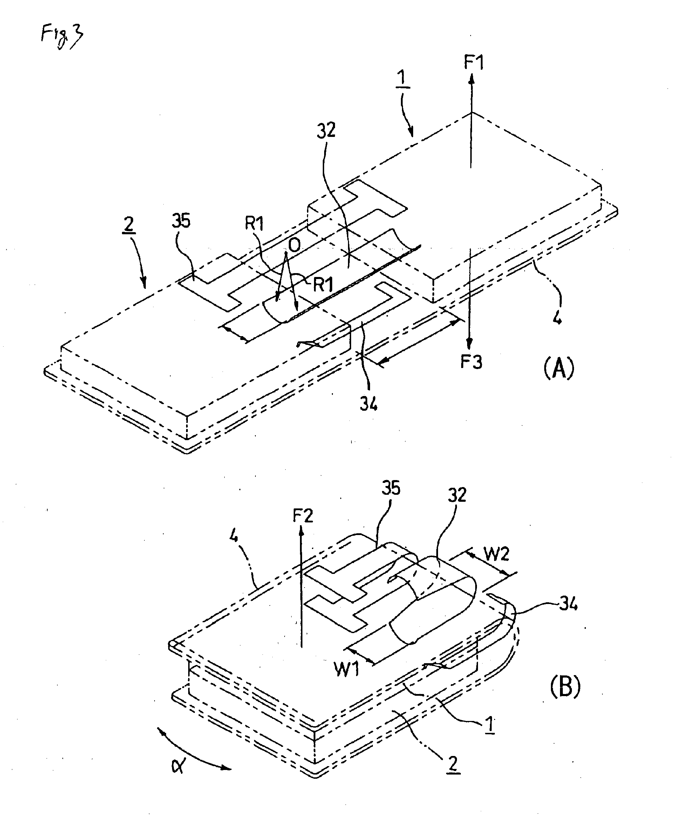

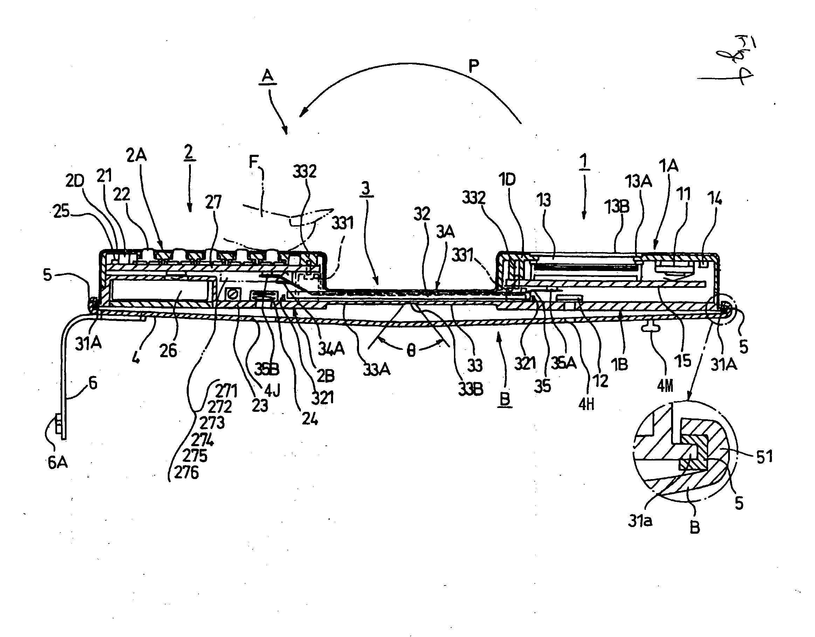

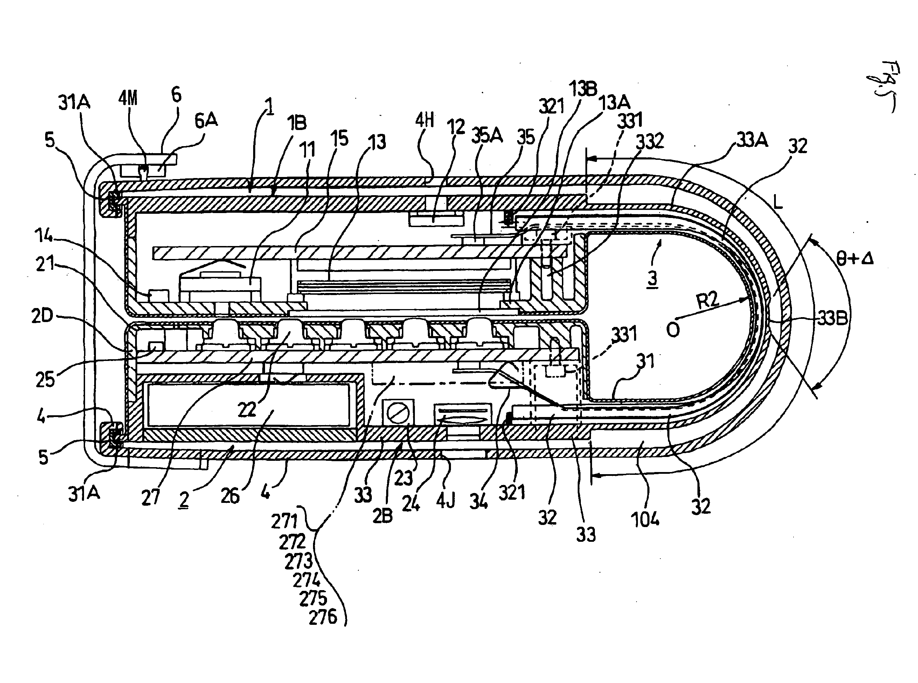

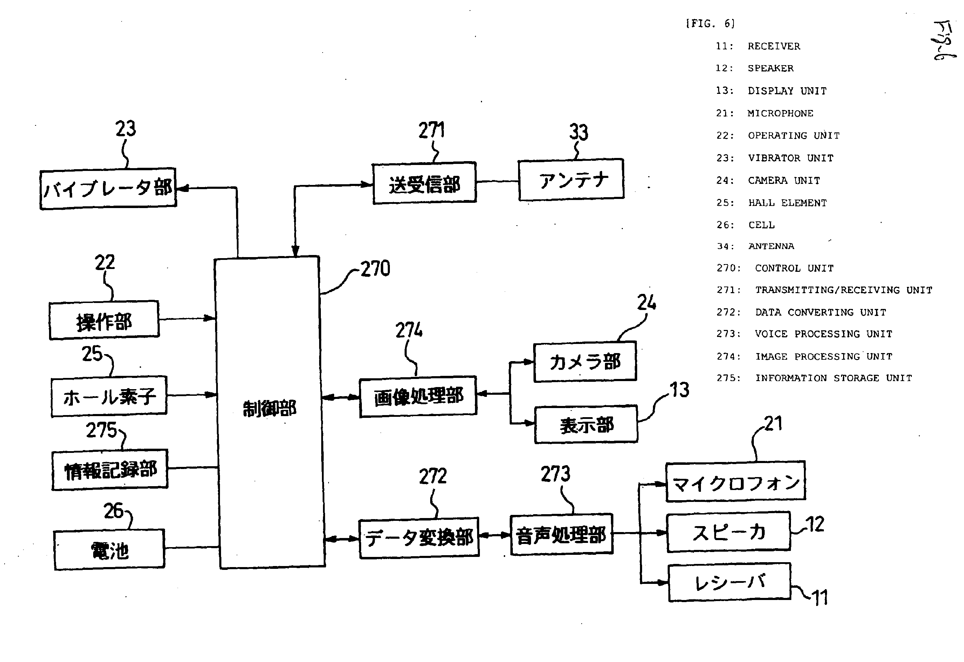

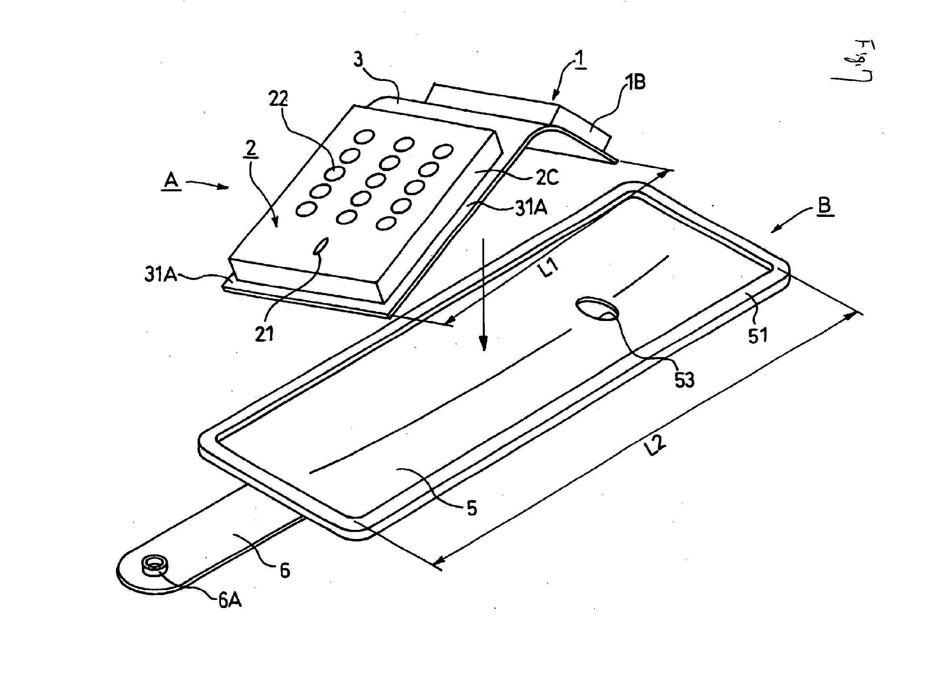

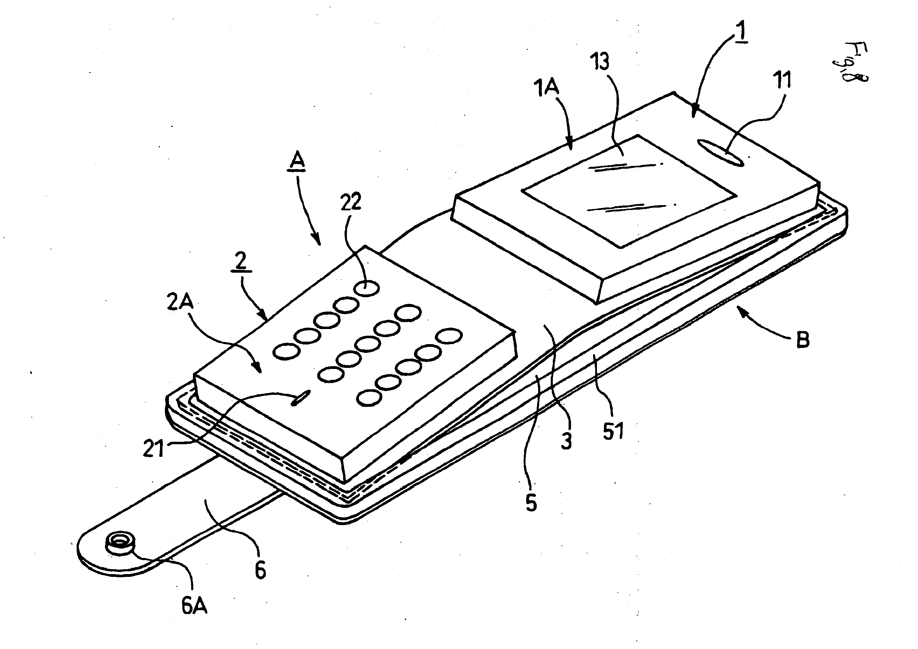

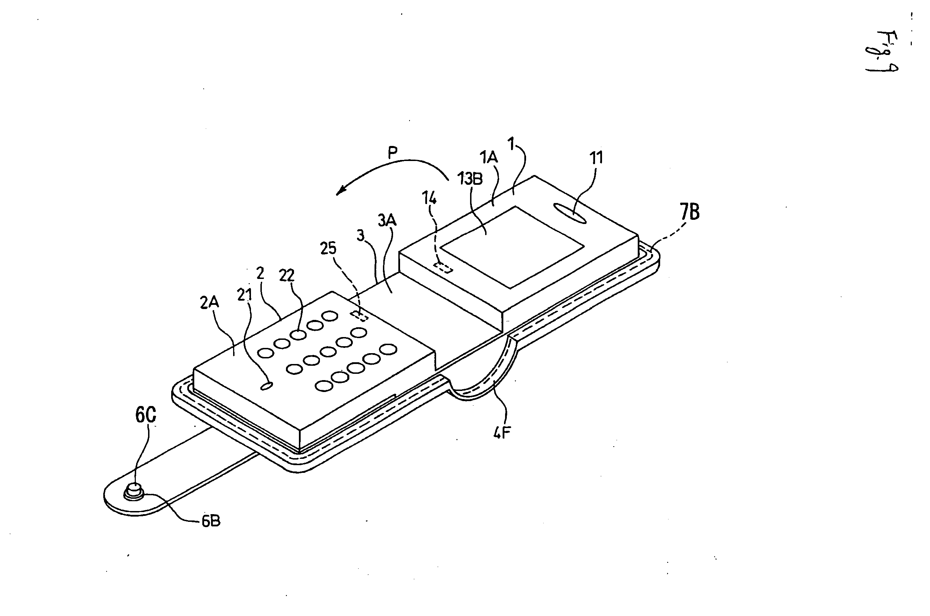

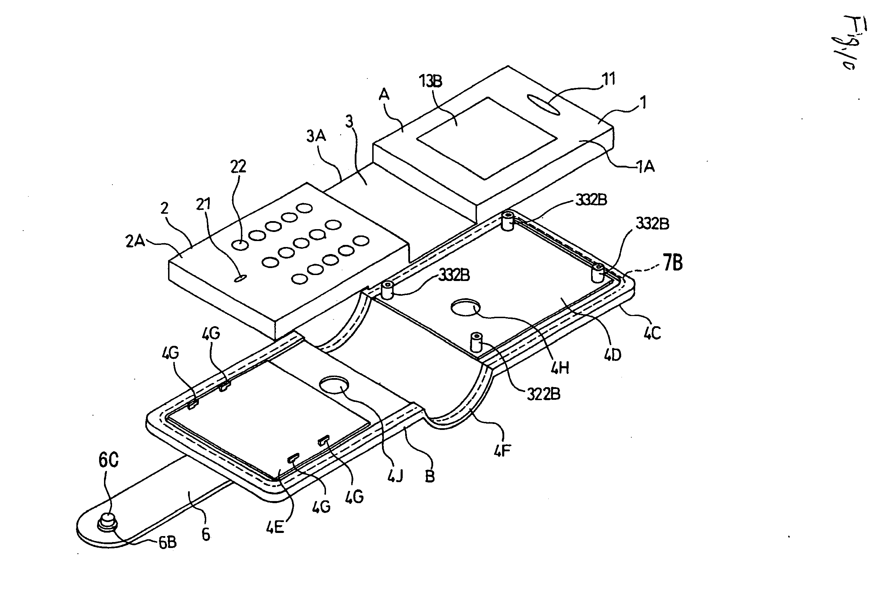

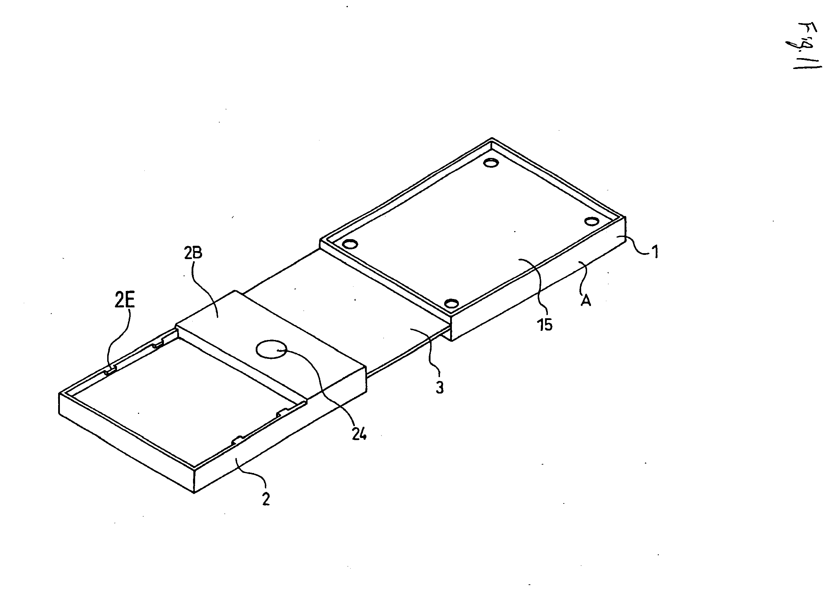

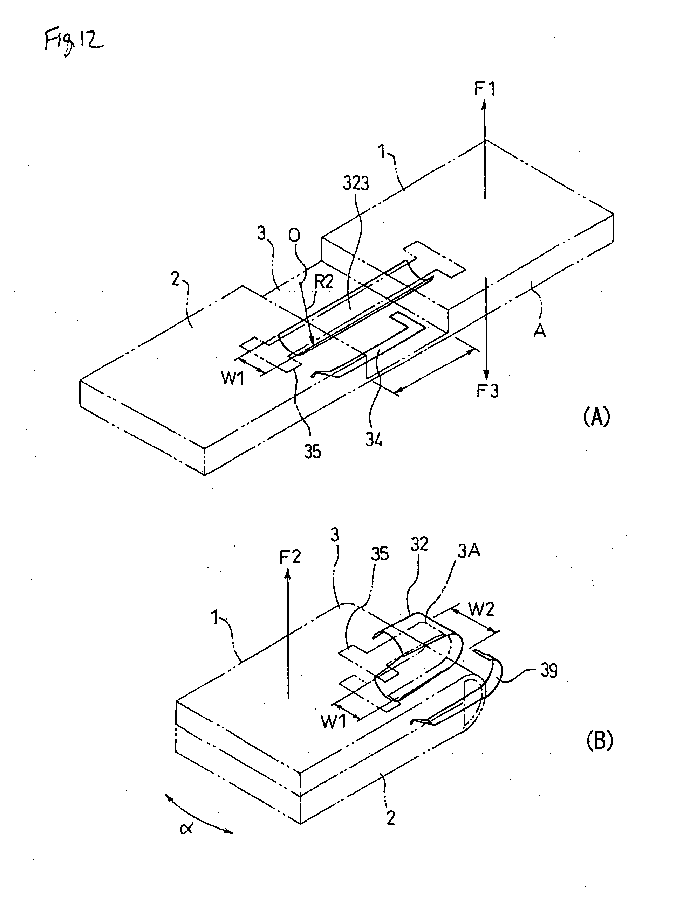

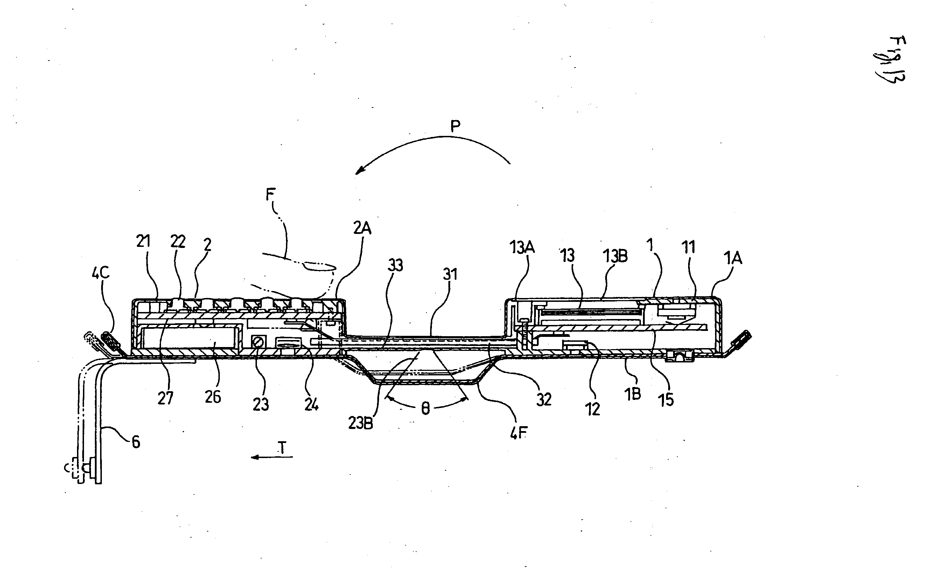

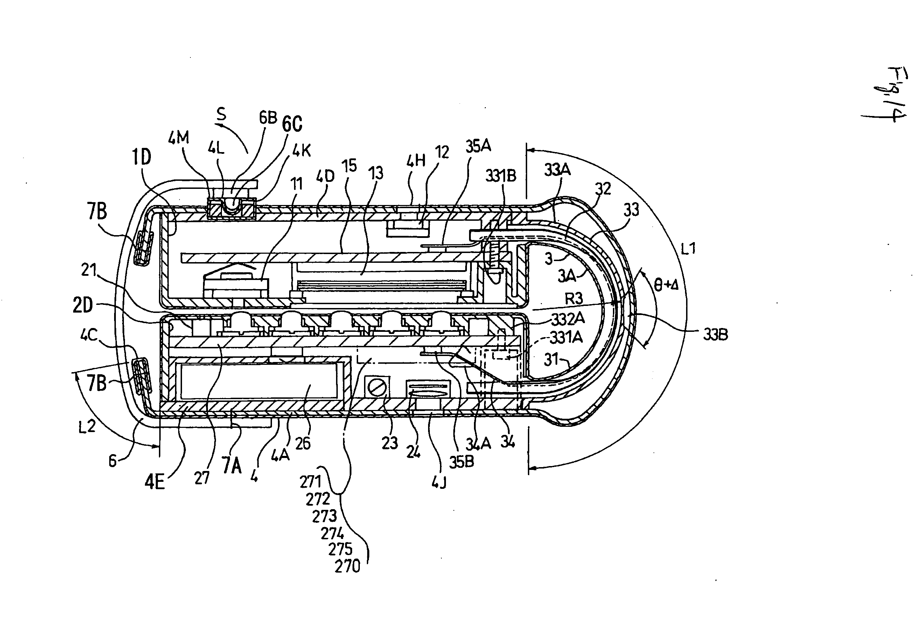

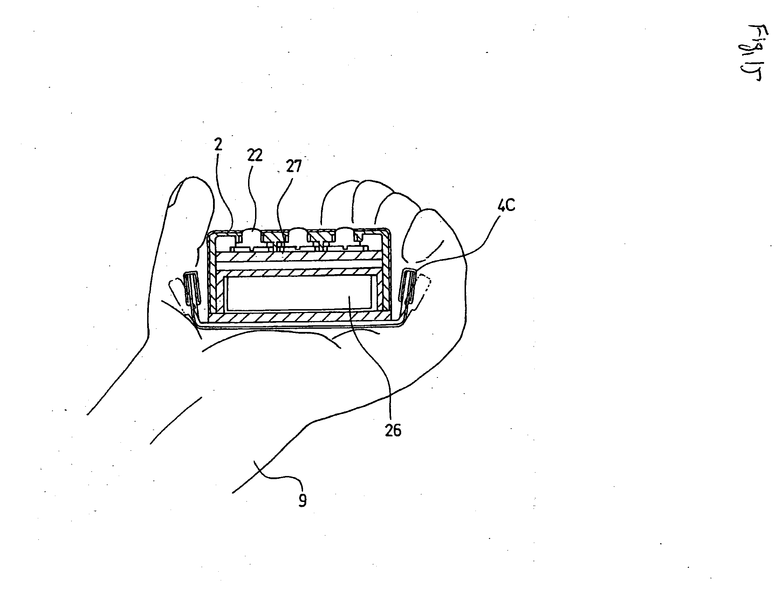

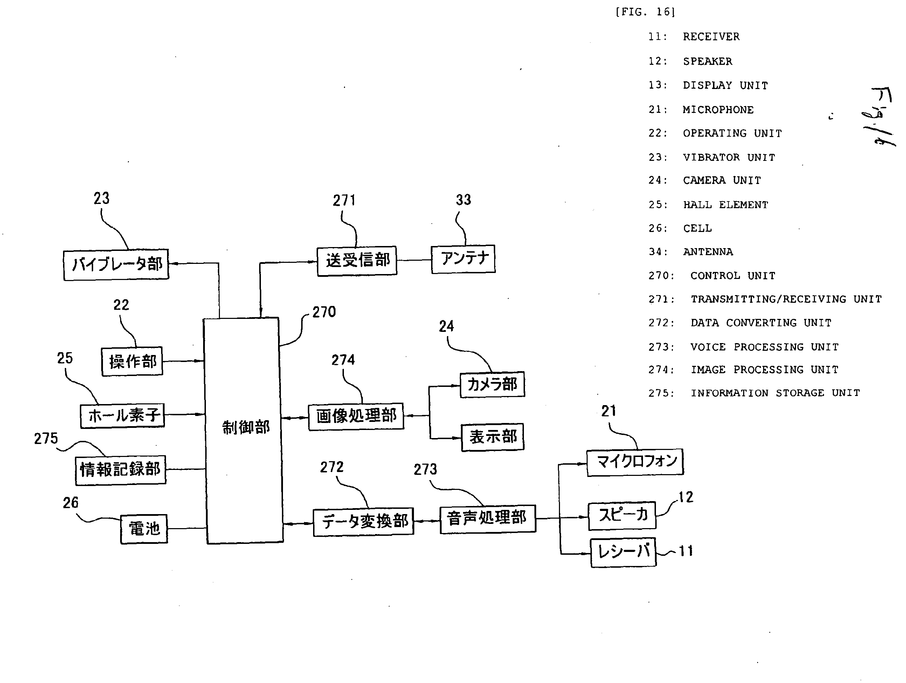

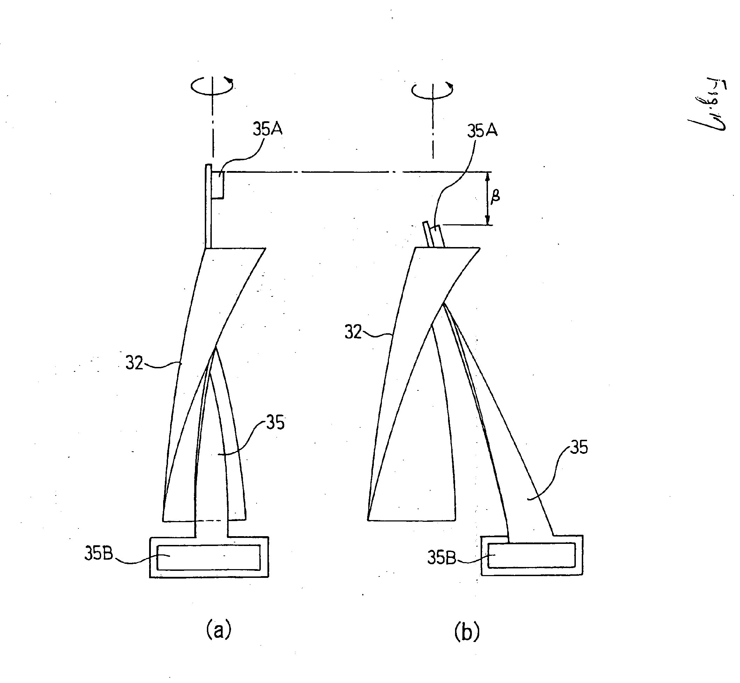

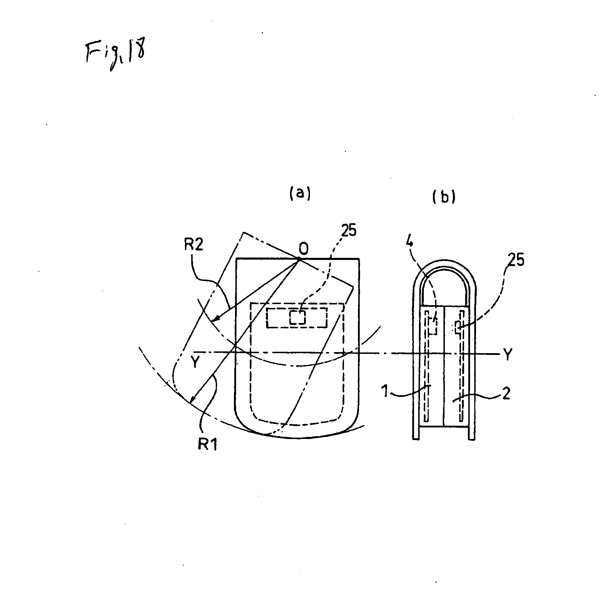

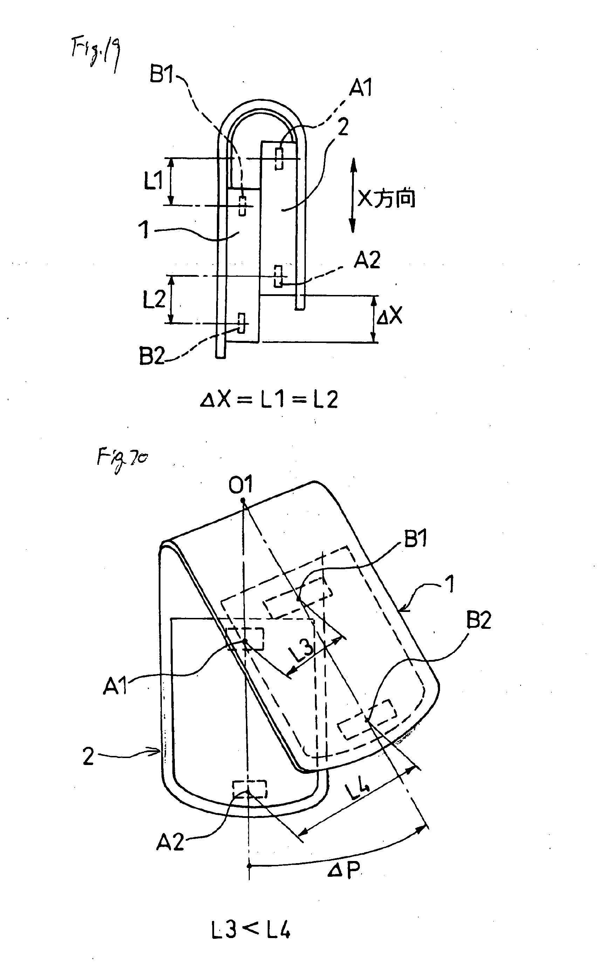

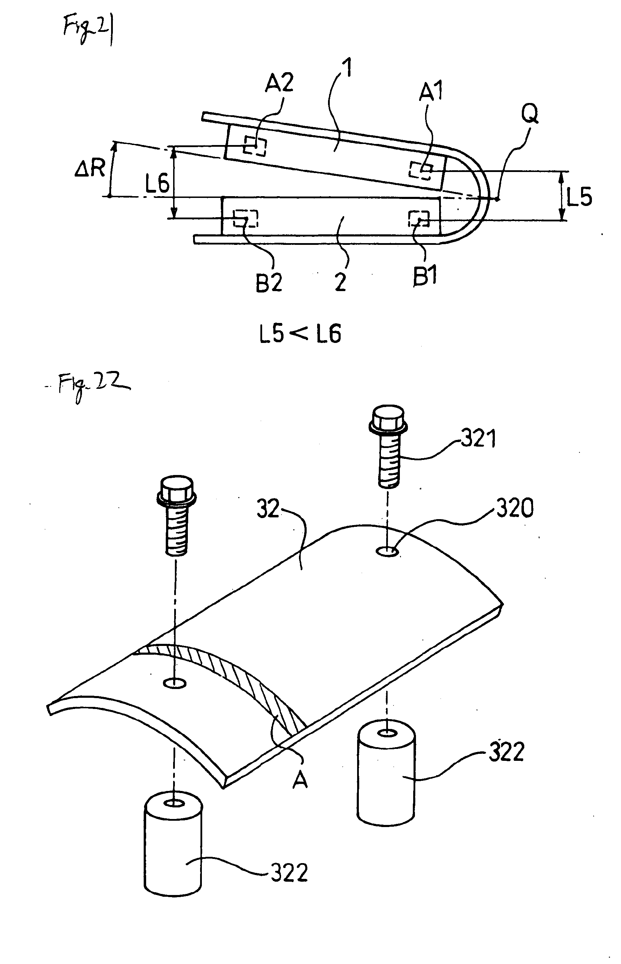

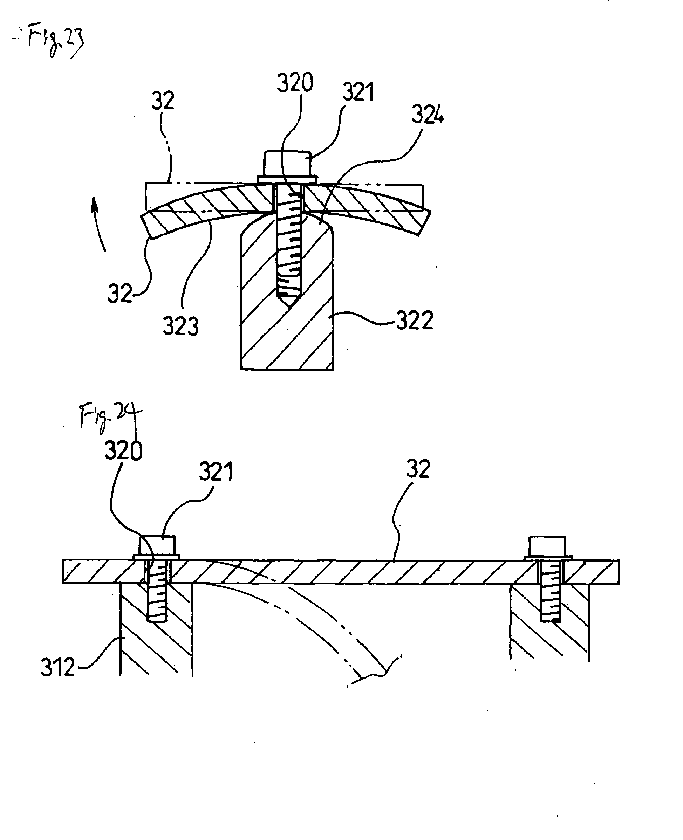

Fig. 1 is a perspective view illustrating the appearance of a folding mobile phone according to the invention. Fig. 2 is a partial exploded perspective view of Fig. 1. Figs. 3A and 3B are diagrams illustrating the unfolded state and the folded state of a connecting device of the folding mobile phone according to the invention, respectively. Fig. 4 is a central cross-sectional view illustrating the unfolded state of the folding mobile phone according to the invention. Fig. 5 is a central cross-sectional view illustrating the folded state of the folding mobile phone according to the invention. Fig. 6 is a block diagram illustrating the electrical structure of a main body portion of the folding mobile phone according to the invention.

As shown in Figs. 1 and 2, the folding mobile phone according to this embodiment includes, as main components, a main body portion A and a fashion cover B provided on an outer surface of the main body portion A.

As shown in Figs. 1 to 6, the main body portion A includes a housing composed of an upper housing portion 1 and a lower housing portion 2 and a connecting device 3 which fixes the upper and lower covers 1 and 2 and is bent at a connecting portion between the upper and lower housing portions 1 and 2.

The upper housing portion 1 accommodates, for example, an earpiece (receiver) 11, serving as a first voice output unit, a speaker 12 (see Fig. 4), serving as a second voice output unit, a display unit 13, a permanent magnet 14, and a first printed board 15 (see Fig. 4). In addition, for example, an LCD constituting the display unit 13, which will be described later, is mounted on the first printed board 15.

Meanwhile, the lower housing portion 2 accommodates, for example, a mouthpiece (microphone) 21, an operating unit 22, a vibrator unit 23 (see Fig. 4), a camera unit 24 (see Fig. 4), a Hall element 25, a detachable cell 26 (see Fig. 4), and a second printed board 27 (see Fig. 4). In Figs. 4 and 6, the second printed board 27 has a transmitting/receiving unit 271, a data converting unit 272, a voice processing unit 273, an image processing unit 274, an information storage unit 275, and a control unit 270 mounted thereon.

The upper and lower housing portions 1 and 2 are fixed on the connecting device 3, with a bendable connecting portion interposed therebetween. The connecting device 3 is mainly composed of a sheet-shaped member 31 and a bendable member 32, and has an antenna 34 and a flexible wiring member (for example, a flexible substrate) 35 provided therein.

Next, components included in the folding mobile phone of this embodiment will be described below in more detail.
Main body portion A
The housing, which is one of the components forming the main body portion A, is composed of the upper housing portion 1 and the lower housing portion 2, as described above. Meanwhile, the connecting device 3, which is one of the components forming the main body portion A, connects one surface (rear surface) of the upper housing portion 1 and one surface (rear surface) of the lower housing portion 2. The bending of the connecting device 3 causes the main body portion to be bent at the connecting portion 3A (in the direction of arrow P and the opposite direction thereof in Figs. 1 to 4).
That is, when the folding mobile phone is not used, the main body portion A is folded, that is, the upper housing portion 1 is bent with a surface thereof facing (being opposite to) the lower housing portion 2, as shown in Fig. 5. On the other hand, when the folding mobile phone is used, as shown in Figs. 1 and 4, the main body portion A is unfolded such that a user's face is opposite to the upper housing portion 1 and the lower housing portion 2.

### (1) Upper housing portion 1

The receiver 11, which is an earpiece, is provided on a main surface 1A of the upper housing portion 1 which is opposite to the lower housing portion 2 in the folded state of the main body portion A such that a voice is output from the main surface 1A. When the folding mobile phone of this embodiment is normally used, the voice of the other part communicating with the user is output from the receiver 11. Meanwhile, in Fig. 4, the speaker 12 is provided on a rear surface 1B of the upper housing portion 1 opposite to the main surface 1A, and outputs a ring tone from the rear surface 1B in the standby state of a mail or phone call.

The display unit 13 is provided in a portion of the main surface 1A of the upper housing portion 1 leaning closer to the connecting portion 3A than the receiver 11.
In addition, a window frame 13A is formed on the main surface 1A of the upper housing portion 1 so as to correspond to the display unit 13, and a transparent window 13B is bonded to the window frame 13A. Therefore, a user can recognize, for example, characters displayed on the display unit 13 through the transparent window 127 from the outside of the upper housing portion 1. The display unit 13 can be composed of, for example, a liquid crystal display device (LCD), and displays, for example, characters, symbols, numbers, images, and maps.

The permanent magnet 14 is provided in the vicinity of the receiver 11 at a corner of the upper housing portion 1.
The receiver 11, the speaker 12, and the display unit 13 are mounted on the first printed board 15 so as to be electrically connected to the control unit 270, as shown in Fig. 6.

### (2) Lower housing portion 2

The microphone 21, which is the mouthpiece, and the operating unit 22 are provided on a main surface 2A of the lower housing portion 2 that is opposite to the main surface 1A of the upper housing portion 1 when the main body portion A is folded.

The microphone 21 is provided close to an end of the lower housing portion opposite to another end thereof facing the connecting portion 3A.

A finger F of a user who operates the operating unit 22 is represented by two-dotted chain lines in Fig. 4. The user can operate the operating unit 22 to perform a ring up or ring off operation, an operation of adjusting the volume of a ring tone output from the receiver 11 or the speaker 12, an operation of inputting characters, symbols, or numbers, an operation of driving a camera unit 24, and a switching operation to a manner mode. Unlike the related art, in this embodiment, a hinge portion that has a substantially cylindrical shape in cross-sectional view and protrudes toward the upper direction is not provided in front of the finger of the user. Therefore, for example, even when the user's fingernail is long, the user can easily operate the operating unit 22.

The vibrator unit 23 starts operating when a call is received to inform the user of the reception of the call.

The camera unit 24 is provided on a rear surface 2B (see Fig. 4) of the lower housing portion 2 opposite to the main surface 2A in parallel to the cell 26 detachable from the lower housing portion 2, and is capable of capturing the image of a subject positioned at the rear side of the operating unit 22. Incident light from the subject captured by the camera unit 24 passes through a lens group and is converted from an optical signal into an electric signal by a photoelectric conversion element, such as a CCD (charge coupled device), thereby generating image information. In Fig. 6, the image information is processed by an image processing unit 274, which will be described later, and is then displayed on the display unit 13 as an image.

Therefore, the camera unit 24 and the display unit 13 are connected to the image processing unit 274, and the image information obtained by the camera unit 112 is stored in an information storage unit 275, which will be described later, through a predetermined operation. Further, the information storage unit 275 can store, in addition to the image information, information on telephone numbers, voice information, image information (for example, received image information) other then the image information on the captured image, and information on transmitted or received mail or characters currently being written.

The Hall element 25 is provided on the second printed board 27 so as to be opposite to the permanent magnet 14 when the main body portion A is folded.
Since the Hall element 25 is arranged close to the permanent magnet 14 when the main body portion A is folded, it detects the magnetic field of the permanent magnet 14 to output a detection signal to the control unit 270, which will be described later. On the other hand, when the main body portion A is unfolded, the permanent magnet 14 is separated from the Hall element 25. In this case, the Hall element 25 cannot detect the magnetic field of the permanent magnet 14, so that it does not generate the detection signal.

That is, when the Hall element 113 detects the magnetic field of the permanent magnet 108, the main body portion 101 is in a folded state. On the other hand, when the Hall element 25 does not detect the magnetic field of the permanent magnet 14, the main body portion A is in an unfolded state. In the folding mobile phone of this embodiment, when the housing is folded, no image is displayed on the display unit 13 in a standby state. On the other hand, when the housing is unfolded, for example, a mark indicating received electric field strength, information on a battery level, time information, and information on an incoming call are displayed on the display unit 13.

The vibrator unit 23, the operating unit 22, the microphone 21, the camera unit 24, the Hall element 25, and the cell 26 are mounted on the second printed board 27 so as to be electrically connected to the control unit 270.

As shown in Fig. 6, the control unit 270 is connected to the transmitting/receiving unit 271, the data converting unit 272, and the information storage unit 275 as well as to the vibrator unit 23, the operating unit 22, the Hall element 25, and the display unit 13 to control these units. The control unit 270 is also connected to the cell 26.

The transmitting/receiving unit 271 is connected to the antenna 34, and processes data received by the antenna 34 to output the data to the data converting unit 272. The data converting unit 272 is connected to the voice processing unit 273, and the voice processing unit 273 is connected to the receiver 11, the speaker 12, and the microphone 21.

The data converting unit 272 converts the data transmitted through the transmitting/receiving unit 271 and the control unit 270 from the antenna 34 into voice data and outputs the voice data to the voice processing unit 273. Meanwhile, the voice processing unit 273 decodes the voice data to generate the voice signal, and outputs the..voice signal to the receiver 11 or the speaker 12. Then, the receiver 11 or the speaker 12 outputs a voice corresponding to the voice signal transmitted from the voice processing unit 273.

Further, the voice processing unit 273 encodes a voice received by the microphone 21 to generate voice data and outputs the generated voice data to the data converting unit 272. The data converting unit 272 converts the input voice data into communication data and outputs the communication data to the transmitting/receiving unit 271. The transmitting/receiving unit 271 processes the received communication data and transmits the processed data as radio waves by using the antenna 34.

### (3) Connecting device 3

The connecting device 3 is bent when the main body portion A is folded, and is unbent when the main body portion A is unfolded. That is, the connecting device 3 has flexibility, and includes a sheet-shaped member for fixing the upper and lower housing portions 1 and 2 with the connecting portion 3A, which is a central portion, interposed therebetween, and a bendable member having enough restoring force and rigidity to restoring a bent state to a flat state.
As shown in Fig. 4, the connecting device 3 of this embodiment includes a first connecting member 31, a second connecting member 32, and a third connecting member 33. Among them, the first connecting member 31 and the third connecting member 33 form the sheet-shaped member, and the second connecting member 32 forms the bendable member.

Further, the second connecting member 32, the antenna 34, and the flexible wiring member 35 are provided in a gap between the first connecting member 31 and the third connecting member 33. One end (a power supply portion 34A) of the antenna 34 is connected to a power supply portion of the second printed board 27, and the other end thereof extends toward the upper housing portion 1. The flexible wiring member 35 having a linear shape has one end connected to the first printed board 15 through a connector 35A and the other end connected to the second printed board 27 through a connector 35B.

As described above, the first connecting member 31 constitutes the connecting portion 3A for connecting the upper and lower housing portions 1 and 2 together with the third connecting member 33. In particular, the first connecting member 31 of this embodiment forms the surface of the connecting portion 3A (a surface facing the same direction as that in which the main surface 1A of the upper housing portion 1 and the main surface 1B of the lower housing portion 2 face) and is connected to the outer surface of the upper housing portion 1 and the outer surface of the lower housing portion 2 (is also used as the outer surfaces of the upper and lower housing portions 1 and 2). In addition, a portion of the first connecting member 31 forms a flange portion 31A protruding from side surfaces 1C and 2C of the upper and lower housing portions 1 and 2 toward the outside.

The second connecting member 32 is provided so as to be laid across the rear surface 1B of the upper housing portion 1 and the rear surface 2B of the lower housing portion 2. The second connecting member 32 is formed of a thin sheet of steel having flexibility and rigidity (for example, carbon tool steel or stainless steel).

The third connecting member 33 integrally connects the rear surface 1B of the upper housing portion 1 to the rear surface 2B of the lower housing portion 2, and both ends of the third connecting member 33 are also connected to the rear surface 1B of the upper housing portion 1 to the rear surface 2B of the lower housing portion 2 (that is, the third connecting member 33 is also used as the rear surfaces of the upper and lower housing portions 1 and 2). In addition, the second connecting member 32 is interposed between the first connecting member 31 and the third connecting member 33.

Further, the first connecting member 31 and the third connecting member 33 are formed of a proper material having flexibility, such as thermoplastic polyester ether elastomer or polyurethane resin. In addition, a material forming the first connecting member 31 and the third connecting member 33 is not limited to the above-mentioned material. For example, any material can be used for the first and third connecting members 31 and 33 as long as it has flexibility and rigidity.

Inner surfaces 1D and 2D of the main surfaces 1A and 2A of the upper and lower housing portions 1 and 2 formed by the first connecting member 31 are formed of a material, such as an ABS resin, different from that forming the main surfaces 1A and 2A. That is, the upper housing portion 1 and the lower housing portion 2 are integrally formed by a different material molding method (for example, an inserting molding method) for integrally forming a product with different kinds of materials.

The reason why the first and second housing portions 1 and 2 are integrally formed with the first connecting member 31 of the connecting device 3 by the different material molding method will be described below.
As shown in Figs. 4 and 5, the third connecting member 33 is fixed to the boards 15 and 27 by driving tapping screws 331 into holes 332 formed in the inner surfaces 1D and 2D of the upper and lower housing portions 1 and 2. In a case in which the tapping screws are tightened with a predetermined clamping torque in order to obtain a predetermined axial force (clamping force), when the allowable shear stress of the holes 332 is weak, the holes 332 are damaged.
It has been known that, in general, the allowable shear stress of ABS resin is stronger than that of the thermoplastic polyether ester elastomer. Therefore, in this embodiment, the holes 332 provided in the main surfaces 1A and 2A of the first and second housing portions 1 and 2 (which are connected to the operating unit 22 and the window frame 13A of the display unit 13) are formed of the ABS resin, which prevents the damage of the holes 332 when the screws are tightened.

However, when the holes 332 connected to the main surfaces 1A and 2A of the first and second housing portions 1 and 2 and the window frame 13A are formed of the thermoplastic polyether ester elastomer, the transparent window 13B is not fixedly adhered to the window frame 13A by an adhesive tape since the thermoplastic polyether ester elastomer generally has weak adhesion. In this case, for example, when the folding mobile phone is dropped, the transparent window 13B may be separated from the window frame 13A.

From this point of view, in this embodiment, in order to solve the above-mentioned problem, the outer surfaces 1A and 2A (actually, formed by the first connecting member 31) of the upper and lower housing portions 1 and 2 formed of thermoplastic polyether ester elastomer are integrally formed with the holes 125 and the window frame 126 formed of ABS resin.

The first connecting member 31 is not necessarily integrally formed with the upper and lower housing portions 1 and 2 by the different material molding method. For example, the first connecting member 31 may be separately formed from the upper and lower housing portions 1 and 2, and the connecting device 3 may be integrally fixed to the upper and lower housing portions 1 and 2 by a mechanical coupling means (for example, a screw or an adhesive). In addition, even when the upper and lower housing portions 1 and 2 and the first connecting member 31 are formed of the same material (for example, thermoplastic polyether ester elastomer), the third connecting member 33 may be fixed to the upper and lower housing portions 1 and 2 or the transparent window 13B may be fixed to the window frame 13A by proper methods other than the above-mentioned method.

Next, the second connecting member 32 forming the bendable member of the connecting device 3 will be described below in detail, mainly referring to Figs. 3A and 3B.
Figs. 3A and 3B are diagrams illustrating the second connecting member 32 of the connecting device 3 of the main body portion A. Fig. 3A is a diagram illustrating the unfolded state of the connecting device 3 of the main body portion A, and Fig. 3B is a diagram illustrating the folded state of the connecting device 3 of the main body portion A.

As shown in Figs. 3A to 5, the second connecting member 32 is a thin plate extending in a straight line from the upper housing portion 1 to the lower housing portion 2 and having an arc shape in sectional view with a width W1 and a curvature R1. The center of the curvature R1 is placed at the main surface 1A of the upper housing portion 1 (or the main surface 2A of the lower housing portion 2), and the center is represented by a point O (Fig. 3B). In addition, one end of the second connecting member 32 is mounted on the upper housing portion 1 (that is, the first connecting member 31 integrally formed with the lower housing portion 2 in Fig. 5), the other end thereof is mounted on the lower housing portion 2 (similarly, the first connecting member 31 integrally formed with the lower housing portion 2). As will be described later, when being bent, the arrangement positions of the two ends are defined by a stopper 321 (which is provided in the first connecting member 31 shown in Fig. 5) after a predetermined amount of clearance required at the time of bending is ensured.

As shown in Fig. 3A, when the connecting device 3 of the main body portion A is in the unfolded state, the second connecting member 32 extends in a straight line from the upper housing portion 1 to the lower housing portion 2, so that a stable state is maintained. In this state, even when the connecting device 3 of the main body portion A in the unfolded state (Fig. 1) is further bent in a direction opposite to the direction of arrow P, since the second curved connecting member 32 has a high degree of rigidity in a direction where the curved state is released (the unfolded main body portion A is further bent), force to maintain the unfolded state is generated (hereinafter, referred to as 'curve maintaining force'). Therefore, force (reverse bending force) required for bending the main body portion in a direction where the unfolded main body portion A is further bent, that is, a direction of a convex curved surface (positive curved surface) opposite to a concave curved surface (negative curved surface) is considerably stronger than force (folding force) required to bend the main body portion in the direction of arrow P, which makes it difficult for the main body portion to be bent. The anti-bending force is determined by the secondary moment of the cross section or the Young's modulus.

In contrast, when the main body portion is bent in the direction of arrow P (see Fig. 4) by force stronger than a predetermined force, the central portion of the second connecting member 32 is bent in a direction where the main body portion A is folded by jumping, but plastic deformation does not occur therein. That is, when force applied is released, the central portion of the second connecting member 32 returns to the flat state by restoring force, which causes the connecting device 3 of the main body portion A to return to the unfolded state. In order words, the second connecting member 32 also functions as a means for preventing the main body portion A from easily being bent in the direction of arrow P.

As shown in Fig. 4B, when the connecting device 3 of the main body portion A is folded, the second connecting member 32 is bent at the connecting portion 3A, which is a central portion between the upper housing portion 1 and the lower housing portion 2. In this case, the sectional shape of the connecting portion 3A, which is a central portion of the second connecting member 32, is elastically deformed from the arc shape to a linear shape, causing a width W2 of the connecting portion 3A to be larger than the width W1 before the elastic deformation.
When the connecting portion 3A is elastically deformed, force to return the connecting portion to the arc shape and the linear shape is generated from the second connecting member 32. That is, when the connecting device 3 of the main body portion A is folded, the second connecting member 32 is bent while receiving force to return the connecting portion to the linear shape (force to restore the width W2 to the width W1).

In this embodiment, the second connecting member 32 is formed of steel having a thickness of 0.1 mm. In addition, the second connecting member 32 has a width W1 of 15 mm and a curvature radius R1 of 20 mm, and a distance L between the upper housing portion 1 and the lower housing portion 2 is 45 mm. In this case, bending starting force (folding force, which will be described later) F1 when the unfolded connecting device 3 of the main body portion A is bent in the direction of arrow P is about 0.6 [N (Newton)]. When the connecting device 3 of the main body portion A is folded, restoring force F2 to restore the connecting device 3 of the main body portion A to the unfolded state is about 1.5 [N]. In addition, force required to further bend the unfolded connecting device 3 of the main body portion A in the direction of arrow P ('reverse bending force', which will be described later) F3 is about 2 [N].

The second connecting member 32 which has an arc shape in sectional view and is provided such that the center O of the arc is positioned on the main surface 1A of the upper housing portion 1 is used as the bendable member of the connecting device 3. As a result, it is possible-to make the force F3 to reversely bend the connecting device (this is referred to as 'reverse bending force'), which is not generally used, stronger than the force F1 required for a user to generally operate the main body portion (force required to fold the main body portion (this is referred to as 'folding force')).
Therefore, when the folding force F1 or the reverse bending force F3 is appropriately set, it is possible to easily fold the unfolded main body portion A. In addition, it is possible to prevent the unfolded connecting device 3 from being reversely bent, and thus to provide the connecting device 3 capable of improving the convenience of users.

Further, when the second connecting member 32 is bent, the curvature radius of the second connecting member 32 is larger than that of the first connecting member 31 by at least a value corresponding to the thickness thereof. Therefore, both ends of the second connecting member 32 in the longitudinal direction should be fixed to the housing (rear surface) with a predetermined clearance, or one end should be slidably fixed to the housing (rear surface) such that the main body portion A can be reliably folded). In this embodiment, both ends of the second connecting member 32 are fixed to the rear surfaces 1B and 2B of the upper and lower housing portions 1 and 2 with a predetermined clearance (not shown).

Next, a supplementary description of the third connecting member 33 will be made below.
As shown in Figs. 4 and 5, in the third connecting member 33, one surface (outer surface) of a portion corresponding to the connecting portion 3A is recessed in the lengthwise direction thereof over a predetermined length L (see Fig. 5), thereby forming a thin portion (which forms a folding force generating means) 33A. A thinnest portion (a concave portion; which also forms a folding force generating means) 33B is provided in the center of the thin portion 33A in a linear shape along a width direction W (a depth direction in Figs. 4 and 5).

The entire thin portion 33A can be easily bent in the direction where the main body portion A is folded by forming the thin portion 33A and the thinnest portion 33B in the main body portion A. When the main body portion A is folded, the thin portion 33A is bent with a distance from the first connecting member 31 being narrowed, while expanding a little. At the same time, the thinnest portion 33B is linearly curved along the width direction where the thinnest portion 33B is formed, while uniformly expanding. When the expansion angle of the thinnest portion 33B before the third connecting member 33 shown in Fig. 4 expands (before the main body portion A is folded) is referred to as 'θ', the expansion angle of the thinnest portion 33B after the third connecting member 33 shown in Fig. 5 expands (after the main body portion A is folded) is θ + Δ.

In the folded state of the main body portion A, when the upper housing portion 1 is intentionally turned with respect to the lower housing portion 2 in the direction of arrow α shown in Fig. 3B, the expansion angle of the third connecting member 33 becomes non-uniform. When the intentional turning is released, the expansion angle becomes uniform. That is, when the main body portion A is folded, the thinnest portion 33B of the third connecting member 33 regulates the bending position of the connecting portion 3A. Therefore, when the thinnest portion 33B of the third connecting member 33 is not provided, there is a fear that, when the main body portion A is folded, the upper housing portion 1 may be arbitrarily turned in the direction of arrow α with respect to the lower housing portion 2.

Further, when the main body portion A is folded, force to restore the first and third connecting members 31 and 33 to the linearly unbent states is generated. However, since the restoring force is considerably weaker than the force F2 generated from the second connecting member 32 (hereinafter, referred to as 'restoring force'), the folding or unfolding force of the main body portion A is almost determined by only the second connecting member 32. This is similarly applied when the main body portion A is folded and at the time of expansion. That is, in these cases, the restoring force also depends on only the second connecting member 32.

When the main body portion 101 is unfolded, the first to third connecting members 31 to 33 are unbent in a straight line, and this unbent state is maintained by the rigidity of the second connecting member 32. That is, when the lower housing portion 2 is held by a user's hand, the upper housing portion 1 is kept open. Therefore, the upper housing portion 1 is not bent in the direction of arrow P and in a direction opposite to the direction of arrow P. Thus, it is possible to easily fold the main body portion A.

Since the connecting portion 3A is flush with the rear surface 1B of the upper housing portion 1 and the rear surface 2B of the lower housing portion 2, a curvature radius R2 (see Fig. 5) of the connecting portion 3A when the main body portion A is folded is substantially equal to half the sum of the thickness of the upper housing portion 1 and the thickness of the lower housing portion 2.
Therefore, when the main body portion A is folded, the antenna 34 and the flexible wiring member 35 provided in the connecting portion 3A are also bent. However, since the curvature radius R2 is sufficiently large, storing stress does not occur in the antenna 34 and the flexible wiring member 35.
As a result, it is not necessary to use members having a long bending life span and high durability for the antenna 34 and the flexible wiring member 35. In addition, when the main body portion A is folded or unfolded, the antenna 34 and the flexible wiring member 35 are provided as shown in Figs. 3A and 3B.

Next, the fashion cover B will be described below in detail with reference to Figs. 1 and 2.
As shown in Fig. 2, the fashion cover B includes an appearance portion 4 having a sack shape, made of a fashionable material, such as jersey or leather, and a frame portion 5 provided in the appearance portion 4.

The appearance portion 4 has a first opening 4H through which a voice is output from the speaker 12 and a first opening 4J formed to correspond to the position of the camera 24. The frame portion 5 has a 'U' shape in sectional view, and the edge of the first connecting member 31 and the flange portion 31A are fitted into the frame portion 5, so that the fashion cover B is mounted on the main body portion A while covering the third connecting member 33. In addition, the fashion cover B is detached from the main body portion only by separating the frame portion 5 from the flange portion 31A.

The frame portion 5 is formed of a flexible elastic material (for example, a rubber material, such as EPDM or urethane, or polyurethane resin having low hardness), and has a plurality of slits 5A provided therein. When the main body portion A is folded and the connecting portion 3A is bent, gaps between the slits 5A vary to cause the frame portion 5 to be easily bent, thereby giving followingness to the main body portion A. ,

A belt member 6 having a hook 6A, serving as one locking means, provided therein is sewed onto one end of an outer surface (a lower surface in Figs. 1 and 2) of the appearance unit 4 of the fashion cover B. In addition, an engaging portion 4M, serving as the other locking means, which is fastened to the hook 6A is provided at a position separated from the other end of the outer surface by a predetermined distance.

In this way, when the main body portion A is folded, the belt member 6 is bent to fasten the hook 6A to the engaging member 4M provided in the vicinity of the other end of the outer surface of the appearance portion 4. In the folded state of the main body portion A, the restoring force F2 of the second connecting member 32 causes the main body portion A to be unfolded. However, since the hook 6A is fastened to the engaging unit 4M, it is possible to prevent the main body portion A from being unfolded even when the restoring force F2 is applied to the main body portion A.
Further, the folded state of the main body portion A may be maintained by setting the restoring force F2 of the second connecting member 32 to be weaker than that generated by the weight of the upper housing portion 1 or the lower housing portion 2 when the main body portion A is folded, without using the belt member 6.

Next, the operation of the folding mobile phone according to the embodiment will be described below in detail.
In the folding mobile phone having the above-mentioned structure according to this embodiment, when the folding mobile phone is not used, the belt member 6 is fastened to maintain the connecting portion 3A to be folded, with the upper housing portion 1 overlapping the lower housing portion 2. On the other hand, when the fastening between the hook 6A of the belt member 6 and the engaging portion 4M is released to use the folding mobile phone, the main body portion A is unfolded by the restoring force F2 of the second connecting member 32 to return to a substantially flat state, and the unfolded state of the main body portion is stably maintained by the curve holding force (action) of the second connecting member 32.

Therefore, in the stable unfolded state of the main body portion. A, for example, making or receiving a phone call, reading mail through the display unit 13, or operating the operation unit 22 to write a letter can be performed. In this case, even when the user views the display unit 107 with a hand holding the lower housing portion 2, the upper housing portion 1 is not bent back by the curve holding force (rigidity) of the second connecting member 32. Therefore, the user can hold the folding mobile phone only in one hand to use it, without feeling inconvenient.

Further, when the main body portion A is unfolded, the gap between the receiver 11 and the microphone 21 becomes largest. In this state, when a receiver is held to a user's ear with the main body portion A being held in the user's hand to answer the telephone, the microphone 21 is positioned in the vicinity of the mouth, which makes it possible for the user to listen to a clear voice and to transmit a clear voice to the other party. In this case, there is a fear that the reverse bending force F3 may be applied to the main body portion A to be bent back, in a state in which the receiver 11 is held to the user's ear. Therefore, when the user further holds the rear surface 1B of the upper housing portion 1, the user can make or answer a phone call in a more stable state.
In Figs. 3A and 3B, in order to prevent the unfolded main body portion A from being further bent in the direction of arrow P, the width W1 of the second connecting member 32 may increase, or the curvature radius R1 may decrease to strength the curve holding force of the second connecting member 32.

Meanwhile, when the folding mobile phone is not used (a call waiting state), folding force stronger than the folding force F1 is applied to the main body portion A such that the main surface 1A of the upper housing portion 1 faces the main surface 2A of the lower housing portion 2, and the hook 6A of the belt member 6 is fastened to the engaging portion 4M, which makes it possible to keep the main body portion A folded. When the main body portion A is folded, the size of the main body portion A is reduced. That is, the projected area of the main body portion in the vertical direction with respect to the main surfaces 1A and 2A of the upper and lower housing portions 1 and 2 is reduced to the minimum, and thus the folding mobile phone is handy to carry.

In the folded state of the main body portion A, the thinnest portion (the concave portion) 33B of the third connecting member 33 expands (see Fig. 5), and the central portion of the second connecting member 32 corresponding to the connecting portion 3A is flattened. In this case, force to release the expanding state is applied to the thinnest portion 33B of the third connecting member 33, and force to restore the flat state to the curved state .is applied to the central portion 128 of the second connecting member 32. However, as described above, since the hook 6A provided in the belt member 6 of the first connecting member 31 of the fashion cover B is fastened to the engaging portion 4M, the folded state of the main body portion A is maintained.

Next, an operation of mounting the fashion cover B to the main body portion A will be described below in detail with reference to Figs. 7 and 8.
Figs. 7 and 8 are diagrams illustrating the operation of mounting the fashion cover B to the main body portion A. As shown in Figs. 7 and 8, first, when the main body portion A is bent in a direction opposite to the folding direction thereof (the unfolded main body portion A is bent back in the direction of arrow P), a distance L1 from an end portion (hereinafter, referred to as a leading end) of the flange portion 31A formed in the upper housing portion 1 to an end portion (hereinafter, referred to as a rear end) of the flange portion 31A formed in the lower housing portion 2 is shorter than an inner diameter L2 of a hook-shaped portion 51 of the fashion cover B.

In this state, the leading end and the rear end of the flange portions 31A are inserted into the hook-shaped portion 51 of the frame portion 5 of the fashion cover B. After the insertion, the main body portion A returns to the flat state. Fig. 7 shows a state in which the main body portion A returns to the flat state.
If the main body portion A is not completely flattened, the flange portion 31A of the connecting device 3 is completely fitted to the hook-shaped portion 51. Therefore, when the entire flange portion 31 is fitted to the hook-shaped portion 51, the main body portion A is completely mounted to the fashion cover B.

When the main body portion A is completely mounted to the fashion cover B in this way, it is possible to cover the flange portion 31A, the rear surface (a surface opposite to the main surface 1A) of the upper housing portion 1, and the rear surface (a surface opposite to the main surface 2A) of the lower housing portion 2, without little gap (interval) therebetween.
Further, the fashion cover B is detachably mounted to the main body portion A. The fashion cover B may be detached from the main body portion A in the reverse order of the mounting operation.

As described above, in the related art, the upper and lower housing portions rotate on the central axis of the hinge device. In contrast, in this embodiment of the invention, two housing portions are connected to each other by a bendable connecting device. In addition, in this embodiment, the connecting device 3 does not protrude from the main surface 1A of the upper housing portion 1 and the main surface 2A of the lower housing portion 2. Therefore, even when a user having a long fingernail operates the operating unit, the user's fingernail does not come into contact with the connecting device 3.

Further, according to this embodiment, since the conventional hinge device is not used, it is possible to provide the connecting device 3 having small volume and size. In order to keep the upper and lower housing portions open, the connecting device 3 includes the second connecting member 32 having an arc-shaped cross section. More specifically, when the main body portion A is unfolded, the second connecting member 32 is arranged with the center of the arc facing the main surface 1A of the upper housing portion 1 (or the main surface 2A of the lower housing portion 2). As a result, the second connecting member 32 is formed in a strip shape that does not occupy much space and has a small thickness and size, and can stably keep the main body portion A unfolded. Therefore, this structure makes it possible to stably perform various operations and to prevent operationality from being lowered.

Furthermore, according to this embodiment, the first connecting member 31 continuously connects the flange portions 31A of the upper and lower housing portions 1 and 2. Therefore, it is possible to easily cover the flange portions 31A with the fashion cover B, thereby covering the outer surface of the main body portion A. In addition, the user can freely replace the fashion cover B according to his or her preference, and thus it is possible to provide a folding mobile phone according to the user's preference. Of course, when the fashion cover B is contaminated, the fashion cover B may be detached and washed. Therefore, it is possible to keep the fashion cover B clean.

In recent years, there has been developed a folding mobile phone having a second display unit that is exposed to the outer surface and displays predetermined information, such as received information and time information, even when the folding mobile phone is folded. However, in this embodiment, the second display unit is not provided in the main body portion A.
In this embodiment, the second display unit can also be provided in, for example, the rear surface 1B of the upper housing portion 1. That is, for example, a transparent portion may be provided at a position of the fashion cover B corresponding to the second display unit such that the user can view, for example, characters from the outside, or a third opening may be formed.
In order to prevent a third party from seeing the second display unit, for example, an openable cover may be formed to cover the transparent portion or the third opening portion. When the user views the second display unit, the user may take off the cover to confirm displayed information.

The housing portions and the connecting device (the sheet-shaped member and the bendable member) of the invention are not limited to the upper and lower housing portions 1 and 2 and the first to third connecting members 31 to 33 of the above-mentioned embodiment. For example, the following structure may be used: first connector terminals for connection to electronic parts are provided on the bottoms of two housing portions, serving as units; a bendable member, an antenna, and a flexible wiring member (for example, a flexible substrate) are provided in the sheet-shaped member; second connector terminals for connection to the first connector terminals are provided on the sheet-shaped member; and when the rear surfaces of the two housing portions are fixed to the sheet-shaped member, the first and second connector terminals are connected to each other.

In this embodiment, the fashion cover B can be detached from the main body portion A. However, the following structure may be used: the fashion cover and the second connecting member are integrally formed, and the second connecting member is detached from the main body portion.
Further, in this embodiment, the main body portion A is unfolded in a straight line (at an angle of 180°). However, the second connecting member 32 may be formed at a predetermined angle, or it may be mounted to the main body portion A in a curved state such that the main body portion A is unfolded at an arbitrary angle smaller than 180°.

The invention is not limited to the above-mentioned embodiment, but various modifications and changes of the invention can be made without departing from the scope of the invention.

Next, another embodiment of the invention will be described below in detail with reference to the accompanying drawings. In this embodiment, as a folding mobile terminal apparatus of the invention, a folding mobile phone, which is a kind of folder-type mobile terminal apparatus, will be described.

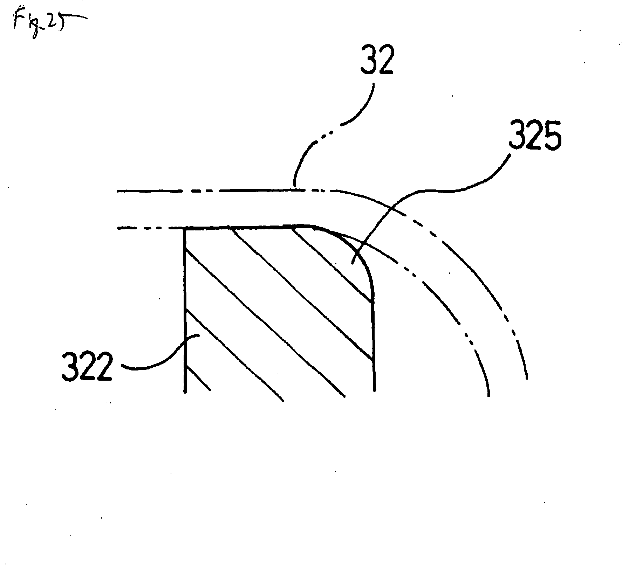

Fig. 9 is a perspective view illustrating the appearance of a folding mobile phone according to this embodiment of the invention. Fig. 10 is a partial exploded perspective of Fig. 9. Fig. 11 is a partial perspective view illustrating a main body portion shown in Fig. 10, as viewed from the rear side. Figs. 12A and 12B are diagrams illustrating the unfolded state and the folded state of the folding mobile phone according to the invention, respectively. Fig. 13 is a central cross-sectional view illustrating the unfolded state of the folding mobile phone according to the invention. Fig. 14 is a central cross-sectional view illustrating the folded state of the folding mobile phone according to the invention. Fig. 15 is a transverse sectional view illustrating a lower housing portion of the folding mobile phone according to the invention. Fig. 16 is a block diagram illustrating the electrical structure of the main body portion of the folding mobile phone according to the invention.

As shown in Figs. 9 and 10, the folding mobile phone according to this embodiment includes, as main components, a main body portion A and a fashion cover B provided on an outer surface of the main body portion A.

As shown in Figs. 9 to 16, the main body portion A includes a housing composed of an upper housing portion 1 and a lower housing portion 2 and a connecting device 3 which fixes the upper and lower covers 1 and 2 and is bent between the upper and lower housing portions 1 and 2.

The upper housing portion 1 accommodates, for example, an earpiece (receiver) 11, serving as a first voice output unit, a speaker 12 (see Fig. 13), serving as a second voice output unit, a display unit 13, a permanent magnet 14, and a first printed board 15 (see Fig. 13). In addition, for example, an LCD constituting the display unit 13, which will be described later, is mounted on the first printed board 15.

Meanwhile, the upper housing portion 2 accommodates, for example, a mouthpiece (microphone) 21, an operating unit 22, a vibrator unit 23 (see Fig. 13), a camera unit 24 (see Fig. 13), a Hall element 25, a detachable cell 26 (see Fig. 13), and a second printed board 27 (see Fig. 13). In Figs. 13 and 16, the second printed board 27 has, for example, a transmitting/receiving unit 271, a data converting unit 272, a voice processing unit 273, an image processing unit 274, an information storage unit 275, and a control unit 270 mounted thereon.

The upper and lower housing portions 1 and 2 are fixed on the connecting device-3, with a bendable connecting portion interposed therebetween. The connecting device 3 is mainly composed of a sheet-shaped member and a bendable member, and has an antenna 34 and a flexible wiring member (for example, a flexible substrate) 35 provided therein.

Next, components included in the folding mobile phone of this embodiment will be described below in more detail.
Main body portion A
The housing, which is one of the components forming the main body portion A, is composed of the upper housing portion 1 and the lower housing portion 2, as described above. Meanwhile, the connecting device 3, which is one of the components forming the main body portion A, connects an end of the lower surface of the upper housing portion 1 and an end of the upper surface of the lower housing portion 2. The bending of the connecting device 3 causes the main body portion to be bent at the connecting portion 3A (in the direction of arrow P and the opposite direction thereof in Figs. 9 to 13).
That is, when the folding mobile phone is not used, the main body portion A is folded, that is, the upper housing portion 1 is bent with a surface thereof facing (being opposite to) the lower housing portion 2, as shown in Fig. 14. On the other hand, when the folding mobile phone is used, as shown in Figs. 9 and 13, the main body portion A is unfolded such that a user's face is opposite to the upper housing portion 1 and the lower housing portion 2.

### (1) Upper housing portion 1

The receiver 11, which is an earpiece, is provided on a main surface 1A of the upper housing portion 1 which is opposite to the lower housing portion 2 in the folded state of the main body portion A such that a voice is output from the main surface 1A. When the folding mobile phone of this embodiment is normally used, the voice of the other part communicating with the user is output from the receiver 11. Meanwhile, in Fig. 13, the speaker 12 is provided on a rear surface 1B of the upper housing portion 1 opposite to the main surface 1A, and outputs a ring tone from the rear surface 1B in the standby state of a mail or phone call. The receiver 11 or the speaker 12 has, for example, a first permanent magnet (not shown), a coil portion (not shown), and a diaphragm (not shown) provided therein. In the receiver 11 or the speaker 12, when a current passes through the coir portion, the diaphragm provided in the first permanent magnet vibrates, which causes a sound to be generated.

The display unit 13 is provided in a portion of the main surface 1A of the upper housing portion 1 leaning closer to the connecting portion 3A than the receiver 11. In addition, a window frame 13A is formed on the main surface 1A of the upper housing portion so as to correspond to the display unit 13, and a transparent window 13B is bonded to the window frame 13A. Therefore, a user can see, for example, characters displayed on the display unit 13 through the transparent window 13B from the outside of the upper housing portion 1. The display unit 13 can be composed of, for example, a liquid crystal display device (LCD), and displays, for example, characters, symbols, numbers, images, and maps.

The permanent magnet 14 for a housing is provided in the vicinity of the lower end of the lower housing portion 1 (in the vicinity of the connecting device 3).
The receiver 11, the speaker 12, and the display unit 13 are mounted on the first printed board 15 so as to be electrically connected to the control unit 270, as shown in Fig. 16.

### (2) Lower housing portion 2

The microphone 21, which is the mouthpiece, and the operating unit 22 are provided on a main surface 2A of the lower housing portion 2 that is opposite to the main surface 1A of the upper housing portion 1 when the main body portion A is folded.

The microphone 21 is provided close to an end of the lower housing portion opposite to another end thereof facing the connecting portion 3A.

A finger F of a user who operates the operating unit 22 is represented by two-dotted chain lines in Fig. 13.
The user can operate the operating unit 22 to perform a ring up or ring off operation, an operation of adjusting the volume of a ring tone output from the receiver 11 or the speaker 12, an operation of inputting characters, symbols, or numbers, an operation of driving a camera unit 24, and a switching operation to a manner mode. Unlike the related art, in this embodiment, a hinge portion that has a substantially cylindrical shape in cross-sectional view and protrudes from the main surface 2A toward the upper direction is not provided in front of the finger of the user. Therefore, for example, even when the user's fingernail is long, the user can easily operate the operating unit 22.

The vibrator unit 23 starts operating when a phone call is received to inform the user of the reception of the call.

The camera unit 24 is provided on a rear surface 2B (see Fig. 13) of the lower housing portion 2 opposite to the main surface 2A in parallel to the cell 26 detachable from the lower housing portion 2, and is capable of capturing the image of a subject positioned at the rear side of the operating unit 22. Incident light from the subject captured by the camera unit 24 passes through a lens group and is converted from an optical signal into an electric signal by a photoelectric conversion element, such as a CCD (charge coupled device), thereby generating image information. In Fig. 16, the image information is processed by an image processing unit 274, which will be described later, and is then displayed on the display unit 13 as an image.

Therefore, the camera unit 24 and the display unit 13 are connected to the image processing unit 274, and the image information obtained by the camera unit 24 is stored in an information storage unit 275, which will be described later, through a predetermined operation. Further, the information storage unit 275 can store, in addition to the image information, information on telephone numbers, voice information, image information (for example, received image information) other then the image information on the captured image, and information on transmitted or received mail or characters currently being written.

The Hall element 25 is a unit for detecting the magnetic field of the permanent magnet 14 for a housing, and is provided on the second printed board 27 so as to be opposite to the permanent magnet 14 when the main body portion A is folded.
Since the Hall element 25 is arranged close to the permanent magnet 14 for a housing when the main body portion A is folded, it detects the magnetic field of the permanent magnet 14 to output a detection signal to a control unit 270, which will be described later. On the other hand, when the main body portion A is unfolded, the permanent magnet 14 for a housing is separated from the Hall element 25. In this case, the Hall element 25 cannot detect the magnetic field of the permanent magnet 14, so that it does not generate the detection signal.

That is, when the Hall element 25 detects the magnetic field of the permanent magnet 14 for a housing, the main body portion A is in a folded state. On the other hand, when the Hall element 25 does not detect the magnetic field of the permanent magnet 14 for a housing, the main body portion A is in an unfolded state. In the folding mobile phone of this embodiment, when the housing is folded, no image is displayed on the display unit 13 in a standby state, so that power is not consumed. In addition, in the folded state, an illuminating unit (not shown) for illuminating the display unit does not emit light. On the other hand, when the housing is unfolded, for example, a mark indicating received electric field strength, information on a battery level, time information, and information on an incoming call are displayed on the display unit 13, and the illuminating unit is turned on to emit light.

When the Hall element 25 detects the magnetic field of the permanent magnet 14 for a housing, it is necessary to reliably detect the folded state even when a positional deviation occurs between the opposing surfaces of the two housing portions 1 and 2 in the rotational direction or the longitudinal direction (the X direction of Fig. 19) or a very small clearance occurs between the opposing surfaces of the housing portions. That is, in the folded state of the main body portion A, when it is detected that the housing portions 1 and 2 are unfolded due to a positional deviation between the opposing surfaces of the two housing portions 1 and 2 in the rotational direction or the longitudinal direction or a very small clearance between the opposing surfaces of the housing portions, a backlight for a liquid crystal device is turned on, causing power consumption. When a device operated only in the folded state is provided, the positional deviation between the housing portions 1 and 2 generated when the device is operated or unfolding may hinder the use of the folding mobile phone.

In this embodiment, the amount of a positional deviation between the opposing surfaces of the two housing portions 1 and 2 in the rotational direction or the longitudinal direction is previously defined, and the Hall element 25 and the permanent magnet 14 for a housing are arranged at a position where the Hall element 25 can detect the magnetic field of the permanent magnet 14 for a housing even when a positional deviation or a very small clearance occurs between the opposing surfaces.

Figs. 18A to 21 show the arrangement between the permanent 14 and the Hall element 25 capable of reliably detecting the folded state even when a positional deviation or a very small clearance occurs between the opposing surfaces of the two housing portions 1 and 2 in the rotational direction.

In this arrangement, the Hall element 25 and the permanent magnet 14 for a housing are arranged close to the connecting portion 3A. More specifically, in the folded state of the main body portion A, the Hall element 25 and the permanent magnet 14 for a housing are arranged closer to the connecting portion 3A than to a center line Y of the main body portion A. Preferably, the Hall element 25 and the permanent magnet 14 for a housing are arranged closer to the connecting portion 3A than to a curvature radius R1 that is half a curvature radius R2 where the two housing portions 1 and 2 deviate from each other in the rotational direction.

Fig. 18A is a diagram illustrating the folded state of the main body portion, and Fig. 18B is a right-side diagram of Fig. 18A. Fig. 19 is a diagram illustrating a state in which the upper housing portion deviates from the lower housing portion in the X direction by ΔX. Fig. 20 is a diagram illustrating a state in which the upper housing portion rotates on the center O in the P direction by ΔP in the folded state. Fig. 21 is a diagram illustrating a state in which the main body portion is folded with a very small clearance between the leading ends of the housing portions.

In Fig. 19, a point A1 indicates the position of the Hall element 25 of this embodiment. A point B1 indicates the position of the permanent magnet 14 for a housing of this embodiment. As an example in which the permanent magnet 14 and the Hall element 25 are arranged at positions different from those in this embodiment, for example, a point A2 indicates the position of the Hall element arranged at the leading end of the upper housing portion 1, and a point B2 indicates the position of the permanent magnet arranged at a position opposite to the position A2 of the Hall element when the two housing portions are folded.

At that time, the upper housing portion 1 deviates from the lower housing portion 2 in the X direction, which is the longitudinal direction, by ΔX. In this case, a distance L1 between the point A1 and the point B1 is equal to a distance L2 between the point A2 and the point B2. Therefore, when the housing deviates in the X direction, a gap between the Hall element and the permanent magnet always occurs regardless of the arrangement positions of the Hall element and the permanent magnet (ΔX = L1 = L2).

Fig. 20 shows a state in which the upper housing portion 1 rotates on the axial center O with respect to the lower housing portion 2 in the direction of arrow by ΔP. In this case, a distance L3 between the point A1 and the point A2 is shorter than a distance L4 between the point A2 and the point B2. That is, when the positional deviation between two housing portions occurs in the rotational direction, it is possible to reduce the gap between the Hall element and the permanent magnet to the minimum since the points A1 and B1 are close to the rotational center O (L3 < L4).

Fig. 21 shows the folded state of the housing portions in which the upper housing portion 1 rotates on an axis O with respect to the lower housing portion 2 in the direction of arrow by ΔR and a very small clearance occurs between the leading ends of the housing portions. In this case, a distance L5 between the point A1 and the point B1 is shorter than a distance L6 between the point A2 and the point B2. That is, when the positional deviation between two housing portions occurs in the rotational direction, it is possible to reduce the gap between the Hall element and the permanent magnet to the minimum since the points A1 and B1 are close to the rotational center (L5 < L6).

As described above, in this embodiment, the permanent magnet and the Hall element are arranged in the vicinity of the connecting member, which makes it possible to reliably detect the folded state of the main body portion even when a positional deviation between the housing portions occurs by external force when the main body portion is folded such that the two housing portions overlap each other. In this way, in the folded state of the housing, the unfolding of the housing is not detected, and thus a backlight for a liquid crystal device is not turned on, which results in the prevention of unnecessary power consumption. When a device operated only in the folded state is provided, the use of the folding mobile phone is not interrupted by the positional deviation between the housing portions generated when the device is operated or unfolding. In addition, according to this embodiment, it is possible to use a permanent magnet having weak magnetic force, and thus to prevent the damage of a magnetic card inserted between the housing portions.

Further, in order to widen the detection region of the Hall element 25 with respect to the magnetic field of the permanent magnet 14 for a housing, the Hall element 25 and the permanent magnet 14 for a housing may increase in area or number.

The vibrator unit 23, the operating unit 22, the microphone 21, the camera unit 24, the Hall element 25, and the cell 26 are mounted on the second printed board 27 so as to be electrically connected to the control unit 270.

As shown in Fig. 16, the control unit 270 is connected to the transmitting/receiving unit 271, the data converting unit 272, and the information storage unit 275 as well as to the vibrator unit 23, the operating unit 22, the Hall element 25, and the display unit 13 to control these units. The control unit 270 is also connected to the cell 26.

The transmitting/receiving unit 271 is connected to the antenna 34, and processes data received by the antenna 34 to output the data to the data converting unit 272. The data converting unit 272 is connected to the voice processing unit 273, and the voice processing unit 273 is connected to the receiver 11, the speaker 12, and the microphone 21.

The data converting unit 272 converts the data transmitted through the transmitting/receiving unit 271 and the control unit 270 from the antenna 34 into voice data and outputs the voice data to the voice processing unit 273. Meanwhile, the voice processing unit 273 decodes the voice data to generate a voice signal and outputs the voice signal to the receiver 11 or the speaker 12. Then, the receiver 11 or the speaker 12 outputs a voice corresponding to the voice signal transmitted from the voice processing unit 273.

Further, the voice processing unit 273 encodes a voice received by the microphone 21 to generate voice data and outputs the generated voice data to the data converting unit 272. The data converting unit 272 converts the input voice data into communication data and outputs the communication data to the transmitting/receiving unit 271. The transmitting/receiving unit 271 processes the received communication data and transmits the processed data as radio waves by using the antenna 34.

### (3) Connecting device 3

The connecting device 3 is bent when the main body portion A is folded, and is unbent when the main body portion A is unfolded. That is, the connecting device 3 has flexibility, and includes a sheet-shaped member for fixing the upper and lower housing portions 1 and 2 with the connecting portion 3A, which is a central portion, interposed therebetween, and a bendable member that has enough restoring force and rigidity to return a bent state to a flat state (a state before bending) and is fixed to the upper and lower housing portions 1 and 2.
As shown in Fig. 13, the connecting device 3 of this embodiment includes a first connecting member 31, a second connecting member 32, and a third connecting member 33. Among them, the first connecting member 31 and the third connecting member 33 form the sheet-shaped member, and the second connecting member 32 forms the bendable member.

Further, the second connecting member 32, the antenna 34, and the flexible wiring member 35 are provided in a space between the first connecting member 31 and the third connecting member 33. One end (a power supply portion 34A) of the antenna 34 is connected to a power supply portion of the second printed board 27, and the other end thereof extends toward the upper housing portion 1. The flexible wiring member 35 having a linear shape overlaps the second connecting member 32, and has one end connected to the first printed board 15 through a connector 35A and the other end connected to the second printed board 27 through a connector 35B.

As described above, the first connecting member 31 constitutes the connecting portion 3A for connecting the upper and lower housing portions 1 and 2 together with the third connecting member 33. In particular, the first connecting member 31 of this embodiment forms the surface of the connecting portion 3A (a surface facing the same direction as that in which the main surface 1A of the upper housing portion 1 and the main surface 1B of the lower housing portion 2 face) and is connected to the outer surface of the upper housing portion 1 and the outer surface of the lower housing portion 2 (is also used as the outer surfaces of the upper and lower housing portions 1 and 2).

The second connecting member 32 is provided so as to be laid across the upper housing portion 1 and the lower housing portion 2. The second connecting member 32 is formed of a thin sheet of steel having flexibility and rigidity (for example, carbon tool steel or stainless steel).

The third connecting member 33 is integrally connected to the rear surface 2B of the lower housing portion 2, and is mounted to the first connecting member 31 so as to cover the second connecting member 32 and the flexible wiring member 35.

Further, the first connecting member 31 and the third connecting member 33 are formed of a proper material having flexibility, such as thermoplastic polyester ether elastomer or polyurethane resin. In addition, a material forming the first connecting member 31 and the third connecting member 33 is not limited to the above-mentioned material. For example, any material can be used for the first and third connecting members 31 and 33 as long as it has flexibility and rigidity.

Inner surfaces 1D and 2C of the main surfaces 1A and 2A of the upper and lower housing portions 1 and 2 formed by the first connecting member 31 are formed of a material, such as an ABS resin, different from that forming the main surfaces 1A and 2A. That is, the upper housing portion 1 and the lower housing portion 2 are integrally formed by a different material molding method (for example, an inserting molding method) for integrally forming a product with different kinds of materials.

The reason why the first and second housing portions 1 and 2 are integrally formed with the first connecting member 31 of the connecting device 3 by the different material molding method will be described below.
As shown in Figs. 13 and 14, the third connecting member 33 is fixed to the board 27 by driving a tapping screw 331A into a hole 332A formed in the inner surface 2D of the lower housing portion 2. In a case in which the tapping screw is tightened with a predetermined clamping torque in order to obtain a predetermined axial force (clamping force), when the allowable shear stress of the hole 332A is weak, the holes 332A is damaged.
It has been known that, in general, the allowable shear stress of ABS resin is stronger than that of a thermoplastic polyether ester elastomer. Therefore, in this embodiment, the hole 332A provided in the inner surface 2D of the lower housing portion 2 (which is connected to, for example, the operating unit 22) is formed of the ABS resin, which prevents the damage of the hole 332A when the screw is tightened.

However, when the main surface 1A of the upper housing portion 1 and the window frame 13A are formed of the thermoplastic polyether ester elastomer, the transparent window 13B is not fixedly adhered to the window frame 13A by an adhesive tape since the thermoplastic polyether ester elastomer generally has weak adhesion. In this case, for example, when the folding mobile phone is dropped, the transparent window 13B may be separated from the window frame 13A.

From this point of view, in this embodiment, in order to solve the above-mentioned problem, the outer surfaces 1A and 2A (actually, formed by the first connecting member 31) of the upper and lower housing portions 1 and 2 formed of a thermoplastic polyether ester elastomer are integrally formed with the window frame 13A formed of ABS resin. In addition, it is possible to form a curvature radius R1 (see Fig. 13) in connecting portions between the first connecting member 31 and the upper and lower housing portions 1 and 2 by integrally forming the outer surfaces of the upper and lower housing portions 1 and 2 with the first connecting member 31, thereby obtaining unity between the upper and lower housing portions 1 and 2 and the first connecting member 31. More specifically, in a case in which the unfolded main body portion A is further bent back, when these members are not integrally formed, the curvature radius is not formed in these members, so that a gap occurs between the upper and lower housing portions 1 and 2. The gap causes the unity not to be obtained. In addition, water may permeate through the gap, and thus separate formation is not preferable for a mobile terminal apparatus not having water resistance.

The first connecting member 31 is not necessarily integrally formed with the upper and lower housing portions 1 and 2 by the different material molding method. For example, the first connecting member 31, the outer surfaces of the upper and lower housing portions 1 and 2, and the inner surfaces of the upper and lower housing portions 1 and 2 may be separately formed from one another, and the first connecting member 31 may be fixed to the inner surfaces of the upper and lower housing portions 1 and 2 by a mechanical coupling means (for example, a screw or an adhesive). In addition, even when the upper and lower housing portions 1 and 2 and the first connecting member 31 are formed of the same material (for example, thermoplastic polyether ester elastomer), the third connecting member 33 may be fixed to the upper and lower housing portions 1 and 2 or the transparent window 13B may be fixed to the window frame 13A by proper methods other than the above-mentioned method.

Next, the second connecting member 32 forming the bendable member of the connecting device 3 will be described below in detail, mainly referring to Figs. 12A and 12B.
Figs. 12A and 12B are diagrams illustrating the second connecting member 32 of the connecting device 3 of the main body portion A. Fig. 12A is a diagram illustrating the unfolded state of the connecting device 3 of the main body portion A, and Fig. 12B is a diagram illustrating the folded state of the connecting device 3 of the main body portion A.

As shown in Figs. 12A to 14, the second connecting member 32 is a thin plate extending in a straight line from the upper housing portion 1 to the lower housing portion 2 and having a curved portion 323 having an arc shape in sectional view. The curved portion 323 has a width W1 and a curvature radius R2. The center of the curvature radius R2 is placed at the main surface 1A of the upper housing portion 1 (or the main surface 2A of the lower housing portion 2), and the center is represented by a point O (Fig. 12A). In addition, the second connecting member 32 has through holes 320 (see Fig. 22) substantially at the center of the arc in the vicinity of both ends thereof, and is fixed to the leading ends of bosses 322 provided on the inner surfaces of the upper and lower housing portions 1 and 2 by screws 321.

As shown in Fig. 12A, when the connecting device 3 of the main body portion A is in the unfolded state, the second connecting member 32 extends in a straight line from the upper housing portion 1 to the lower housing portion 2, with the arc having the curvature radius R2 being maintained from one end thereof to the other end, so that a stable state is maintained. In this state, even when the connecting device 3 of the main body portion A in the unfolded state (Fig. 9) is further bent in a direction opposite to the direction of arrow P, since the second curved connecting member 32 has a high degree of rigidity in a direction where the curved state is released (the unfolded main body portion A is further bent), force to maintain the unfolded state is generated (hereinafter, referred to as 'curve maintaining force'). Therefore, force (reverse bending force) required for bending the main body portion in a direction where the unfolded main body portion A is further bent back, that is, a direction of a convex curved surface (positive curved surface) opposite to a concave curved surface (negative curved surface) is considerably stronger than force required for bending the main body portion in the direction of arrow P, which makes it difficult for the main body portion to be bent. The anti-bending force is determined by the secondary moment of the cross section or the Young's modulus.

In contrast, when the main body portion is bent in the direction of arrow P (see Fig. 13) by force stronger than a predetermined force, the central portion of the second connecting member 32 is bent in a direction where the main body portion A is folded by jumping, but plastic deformation does not occur therein. That is, when force applied is released, the central portion of the second connecting member returns to the flat state by restoring force, which causes the connecting device 3 of the main body portion A to return to the unfolded state. In order words, the second connecting member 32 also functions as a means for preventing the main body portion A from easily being bent in the direction of arrow P.

As shown in Fig. 12B, when the connecting device 3 of the main body portion A is folded, the second connecting member 32 is bent at the connecting portion 3A, which is a central portion between the upper housing portion 1 and the lower housing portion 2. In this case, the sectional shape of the connecting portion 3A, which is a central portion of the second connecting member 32, is elastically deformed from the arc shape to a linear shape, causing a width W2 of the connecting portion 3A to be larger than the width W1 before the elastic deformation. Both ends of the connecting portion 3A are elastically deformed close to a flat shape.

When the connecting portion 3A is elastically deformed, force to return to the arc shape and the linear shape is generated from the second connecting member 32. That is, when the connecting device 3 of the main body portion A is folded, the second connecting member 32 is bent while receiving the force to return to the linear shape (the force to restore the width W2 to the width W1).

In this embodiment, the second connecting member 32 is formed of a copper plate having a thickness of 0.1 mm, a width W1 of 20 mm, and a curvature radius R1 of R25 mm, and a distance L1 between the upper housing portion 1 and the lower housing portion 2 is 30 mm.

Similar to when the unfolded main body portion is further bent in a direction opposite to the direction of arrow P, the maximum stress occurs at the time of jumping.
Therefore, the width W1 and the curvature radius R1 may be determined such that the stress occurring at the time of jumping does not exceed allowable stress of a selected material.

In the second connecting member 32 of this embodiment, bending starting force (folding force, which will be described later) F1 when the unfolded connecting device 3 starts to be bent in the direction of arrow P is about 0.6 [N (Newton)]. When the connecting device 3 of the main body portion A is folded, restoring force F2 to restore the connecting device 3 of the main body portion A to the unfolded state is about 1.5 [N]. In addition, force required to further bend the unfolded connecting device 3 of the main body portion A in the direction of arrow P ('reverse bending force', which will be described later) F3 is about 2 [N].

The second connecting member 32 which has an arc shape in sectional view and is provided such that the center O of the arc is positioned on the main surface 1A of the upper housing portion 1 is used as the bendable member of the connecting device 3. As a result, it is possible to make the force F3 to reversely bend the connecting device (this is referred to as 'reverse bending force'), which is not generally used, stronger than the force F1 required for a user to generally operate the main body portion (force required to fold the main body portion (this is referred to as 'folding force')).
Therefore, when the folding force F1 or the reverse bending force F3 is appropriately set, it is possible to easily fold the unfolded main body portion A. In addition, it is possible to prevent the unfolded connecting device 3 from being reversely bent, and thus to provide the connecting device 3 capable of improving the convenience of users.

Figs. 22 to 25 are diagrams illustrating an example in which both ends of the second connecting member 32 are screwed to the corresponding bosses 322 of the upper and lower housing portions 1 and 2.
The through holes 320 are provided substantially in the center of the arc in the vicinities of both ends of the second connecting member 32, and the second connecting member 32 is fixed to the leading ends of the bosses 322 provided on the inner surfaces of the upper and lower housing portions 1 and 2 by screws 321. In this case, as shown in Fig. 23, spherical portions 324 are formed at the leading ends of the bosses 322. Therefore, when the curved portion 323 of the second connecting member 32 is straightened (two-dotted chain line of Fig. 23) or curved at the time of folding or unfolding, the second connecting member 32 does not come into contact with the edges of the leading ends of the bosses 322. When the main body portion is folded, a curvature radius R formed by the curved portion of the second connecting member 32 is formed along the spherical portion. The curvature radius R is zero (or close to a right angle) at the edges, which causes the maximum stress to occur at the time of folding. Therefore, the structure in which the curvature R is formed along the spherical portion makes it possible to improve the durability of the second connecting member 32. In addition, as shown in Fig. 24, the second connecting member 32 is also bent in the longitudinal direction when the upper and lower housing portions 1 and 2 are folded or unfolded. Therefore, as shown in Fig. 25, by forming R portions 325 formed in the inner portions of the leading ends of the bosses 322, opposite to each other, that are provided on the inner surfaces of the upper and lower housing portions 1 and 2, it is possible to prevent the second connecting member 32 from coming into contact with the edges of the leading ends of the bosses 322 when the upper and lower housing portions 1 and 2 are folded or unfolded. Thus, it is possible to improve the durability of the second connecting member 32.

Next, a supplementary description of the third connecting member 33 will be made below.
As shown in Figs. 13 and 14, in the third connecting member 33, one surface (outer surface) of a portion corresponding to the connecting portion 3A is recessed in the lengthwise direction thereof over a predetermined length L1 (see Fig. 14), thereby forming a thin portion (which forms a folding force generating means) 33A. A thinnest portion (a concave portion; which also forms a folding force generating means) 33B is provided in the center of the thin portion 33A in a linear shape along a width direction (a depth direction in Figs. 13 and 14).

The entire thin portion 33A can be easily bent in the direction where the main body portion A is folded by forming the thin portion 33A and the thinnest portion 33B in the main body portion A. When the main body portion A is folded, the thin portion 33A is bent with a distance from the first connecting member 31 being narrowed, while expanding a little. At the same time, the thinnest portion 33B is linearly curved along the width direction where the thinnest portion 33B is formed, while uniformly expanding. When the expansion angle of the thinnest portion 33B before the third connecting member 33 shown in Fig. 13 expands (before the main body portion A is folded) is referred to as 'θ', the expansion angle of the thinnest portion 33B after the third connecting member 33 shown in Fig. 14 expands (after the main body portion A is folded) is θ + Δ.

In the folded state of the main body portion A, when the upper housing portion 1 is intentionally turned with respect to the lower housing portion 2 in the direction of arrow α shown in Fig. 12B, the expansion angle of the third connecting member 33 becomes non-uniform. When the intentional turning is released, the expansion angle becomes uniform. That is, when the main body portion A is folded, the thinnest portion 33B of the third connecting member 33 regulates the bending position of the connecting portion 3A. Therefore, when the thinnest portion 33B of the third connecting member 33 is not provided, there is a fear that, when the main body portion A is folded, the upper housing portion 1 may be arbitrarily turned in the direction of arrow α with respect to the lower housing portion 2.

As described above, the flexible wiring member 35 overlaps the second connecting member 32, When the intentional turning occurs, the flexible wiring member 35 is also twisted.

The above will be described below with reference to the drawings. Figs. 17A and 17B are front views illustrating the positional relationship between the second connecting member and the flexible wiring member when the upper housing portion deviates from the lower housing portion. More specifically, Fig. 17A shows a state in which the flexible wiring member overlaps on the proximal side of the second connecting member, and Fig. 17B shows a state in which the flexible wiring member is arranged on the right side of the second connecting member (two members do not overlap each other). In Fig. 17A, as described above, since the flexible wiring member 35 overlaps the second connecting member 32, the second connecting member 32 and the flexible wiring member 35 are twisted by the same degree of magnitude when the upper housing portion 1 deviates from the lower housing portion in the counterclockwise direction by an angle of about 90°. In Fig. 17B, when the upper housing portion 1 deviates from the lower housing portion in the counterclockwise direction by an angle of about 90°, the second connecting member 32 composed of a copper plate does not expand or contract, but is only twisted. Meanwhile, the flexible wiring member 35 is twisted while rotating on the second connecting member 32, so that the connector 35A of the- flexible wiring member 35 is positioned on the depth side of the second connecting member 32. Since the flexible wiring member 35 does not expand or contract, the position of the connector 35A is lower than that shown in Fig. 17A by a distance β.

Therefore, in the latter case, torsion (stress) and tensile stress are applied to the flexible wiring ember 35. As a result, tensile stress is also applied to the connectors 35A and 35B, which causes the connectors 35A and 35B to be detached from the first printed board 15 and the second printed board 27 or to be damaged. In this case, the flexible wiring member may be broken. Therefore, the flexible wiring member 35 is arranged so as to overlap the second connecting member 32 in order to solve the above-mentioned unexpected problems.

In this structure, when the flexible wiring member 35 is provided on the concave side of the curved portion 323, it is possible to reduce the thickness of an overlapping structure of the second connecting member 32 and the flexible wiring member 35. On the other hand, when the flexible wiring member 35 is provided on the convex side of the curved portion 323, it is possible to widen the width of the flexible wiring member 35.

Further, when the main body portion A is folded, force to restore the first and third connecting members 31 and 33 to the linearly unbent states is generated. However, since the restoring force is considerably weaker than the force F2 generated from the second connecting member 32 formed of a thin copper plate (hereinafter, referred to as 'restoring force'), the folding or unfolding force of the main body portion A is almost determined by only the second connecting member 32. This is similarly applied when the main body portion A is folded and at the time of expansion. That is, in these cases, the restoring force also depends on only the second connecting member 32.

When the main body portion A is unfolded, the first to third connecting members 31 to 33 are unbent in a straight line, and this unbent state is maintained by the rigidity of the second connecting member 32. That is, when the lower housing portion 2 is held in a user's hand, the upper housing portion 1 is kept open. Therefore, the upper housing portion 1 is not bent in the direction of arrow P and in a direction opposite to the direction of arrow P. Thus, it is possible to easily fold the main body portion A.

Since the connecting portion 3A is flush with the rear surface 1B of the upper housing portion 1 and the rear surface 2B of the lower housing portion 2, a curvature radius R3 (see Fig. 14) formed by the connecting portion 3A when the main body portion A is folded is substantially equal to half the sum of the thickness of the upper housing portion 1 and the thickness of the lower housing portion 2.
Therefore, when the main body portion A is folded, the antenna 34 and the flexible wiring member 35 provided in the connecting portion 3A are also bent. However, since the curvature radius R3 is sufficiently large, storing stress does not occur in the antenna 34 and the flexible wiring member 35.
As a result, it is not necessary to use members having a long bending life span and high durability for the antenna 34 and the flexible wiring member 35. In addition, when the main body portion A is folded or unfolded, the antenna 34 and the flexible wiring member 35 are provided as shown in Figs. 12A and 12B.

Next, the fashion cover B will be described below in detail with reference to Figs. 9 to 15.
As shown in Figs. 10, 13, 14, and 15, the fashion cover B includes a base member 4A; an appearance portion 4B which covers the outer surface of the base member 4A and is formed of a fashionable material (integument), such as a natural fiber (cotton and flax), a synthetic fiber (acryl, nylon, and urethane), or a leather material; and an edge winding portion 4C which is made of the same material as that forming the appearance portion 4B and is provided on the outer peripheral surface of the base member 4A so as to be connected to the appearance portion 4B.

The base member 4A is formed of a proper material having flexibility, such as thermoplastic polyester ether elastomer or polyurethane resin. An upper-housing-portion rear surface portion 4D forming the rear surface 1B of the upper housing portion 1 and a cell cover portion 4E covering the cell 26 are made of an ABS resin and are integrally formed on the inner surface of the base member 4A. That is, the base 4A is also formed by a different material molding method. When the rear surface of the base member 4A is mounted on the upper and lower housing portions 1 and 2, a curved portion 4F is provided at the center of the base member 4A in order to form a bendable projecting portion protruding from the upper and the lower housing portions 1 and 2 to the outside. Holes 332B are formed in the upper-housing-portion rear surface portion 4D, and the upper-housing-portion rear surface portion 4D is fixed to the upper housing portion 1 by driving tapping screws 331B into the holes 332B. Engaging claws 4G (four claws), serving as engaging units, formed on the cell cover portion 4E of the base member 4A are detachably mounted to grappling claws 2E (four claws in Fig. 11) formed on the lower housing portion 2. When the inner surface of the base member 4A (the rear surface of the appearance portion 4B) is mounted to the main body portion A, the connecting portion 3A is separated from the curved portion 4F.

The appearance portion 4B (integument) provided on the outer surface of the base member 4A is previously adhered to the base member 4A in order to prevent the integument 4B from moving relative to the base member 4A. Then, a belt member 6 is sewed to the base member 4A and the integument 4B with a thread 7A, and the edge winding member 4C is sewed to the base member 4A and the integument 4B with a thread 7B. When the edge winding portion 4C is sewed, in order to press a material by a sewing machine and to transfer the material, a flat portion protruding from the edge of the base member 4A by a predetermined distance L2 is needed. In this embodiment, the distance L2 is ensured. In addition, a curved portion exists within the distance L2, but it is flatted at the time of sewing since the base member 4A is formed of a flexible material as described above.

This embodiment is described with reference to Fig. 15. When the rear surface of the base member 4A is mounted to the main body portion A, the base member 4A protrudes from the edge of the main body portion A, with the edge winding portion 4C falling to the outside. The edge winding portion 4C before the falling is represented by a two-dotted chain line. The protruding edge winding portion 4C has flexibility, as described above, so that it is bent toward the upper and lower housing portions 1 and 2. When the upper and lower housing portions 1 and 2 are held in a user's hand, the edge winding portion 4C can be deformed so as to be bent toward the upper and lower housing portions 1 and 2, so that the user does not feel the main body portion A being wide at the time of holding. Fig. 15 shows a state in which the user holds the lower housing portion 2 in his or her hand, and the user's hand is represented by a character 'G'. Since only the appearance portion 4B comes into contact with the user's hand G, the user feels only the touch of the appearance portion 4B. Therefore, when the appearance portion 4B is formed of a soft material, it is possible to make the user feel softer, as compared with a conventional structure in which it is formed of resin (a hard material).

The appearance portion 4B has a first opening 4H through which a voice is output from the speaker 12 and a second opening 4J formed to correspond to the position of the camera 24. The integument 4B is attached to the base member 4A and is then sewed, as described above. The attachment before sewing makes it possible to stabilize the sewing position and to prevent the appearance portion 4B from moving (deviating) relative to the base member 4A at the time of holding. Therefore, it is possible to prevent the fashion cover from covering the camera unit 24 due to the positional deviation occurring when the user holds the folding mobile phone to take a picture by using a camera function. In addition, this structure makes it possible for a user to hold the folding mobile phone without feeing incongruous.

Further, a belt member 6 is sewed, at its one end, onto one end (in the vicinity of the rear surface of the cell cover) of the appearance portion 4B of the fashion cover B. The belt member 6 has a magnetic metal member 6B at the other end thereof, and a convex portion 6C is formed in the center of the metal member 6B. In addition, an engaging portion 4M having a second permanent magnet 4K therein is provided at the other end of the appearance portion 4B (in the vicinity of the rear surface of the receiver), and a concave portion 4L is formed in the center of the engaging member 4M.

In this way, when the main body portion A is folded, the belt member 6 is bent to engage the metal member 6B with the engaging member 4M provided in the vicinity of the other end of the appearance portion 4B. In the folded state of the main body portion A, the edge winding portion 4C falls toward the main body portion A, and the belt member 6 is bent while extending to engage the metal member 6B with the engaging unit 4M, so that the main body portion A is folded with little gap.

When the main body portion A is folded in this way, the restoring force F2 of the second connecting member 32 causes the main body portion. A to be unfolded. However, since the metal member 6B is engaged with the engaging unit 4M, it is possible to prevent the main body portion A from being unfolded even when the restoring force F2 is applied to the main body portion A.

Further, the engagement between the metal member 6B and the engaging member 4M may be released by lifting up the leading end of the belt member 6 in the direction of arrow S. That is, when force to pull out the convex portion 6C from the concave portion 4L is applied, the engagement is easily released. In the engaged state, when the restoring force F2 is applied to the main body portion A, the convex portion 6C is just inclined in the radius direction of the concave portion 4L. Thus, the convex portion does not easily come out from the concave portion. The folded state of the main body portion A may be maintained by setting the restoring force F2 of the second connecting member 32 to be weaker than that generated by the weight of the upper housing portion 1 or the lower housing portion 2 when the main body portion A is folded, without using the belt member 6.

Alternatively, the concave portion 4L may be formed in the metal member 6B of the belt member 6, and the convex portion 6C may be formed on the other side of the appearance portion 4B to engage the two members.

Next, the operation of the folding mobile phone according to the embodiment will be described below in detail.
In the folding mobile phone having the above-mentioned structure according to this embodiment, when the folding mobile phone is not used, the belt member 6 is fastened to maintain the connecting portion 3A to be bent, with the upper housing portion 1 overlapping the lower housing portion 2. On the other hand, when the engagement between the metal member 6B of the belt member 6 and the engaging portion 4M is released to use the folding mobile phone, the main body portion A is unfolded by the restoring force F2 of the second connecting member 32 to return to a substantially flat state, and the unfolded state of the main body portion is stably maintained by the curve holding force (action) of the second connecting member 32.

Therefore, in the stable unfolded state of the main body portion A, for example, making or receiving a phone call, reading mail through the display unit 13, or operating the operation unit 22 to write a letter can be performed. In this case, even when the user views the display unit 107 with a hand holding the lower housing portion 2, the upper housing portion 1 is not bent back by the curve holding force (rigidity) of the second connecting member 32. Therefore, the user can hold the folding mobile phone only in one hand to use it, without feeling inconvenient.

Further, when the main body portion A is unfolded, the gap between the receiver 11 and the microphone 21 becomes largest. In this state, when a receiver is held to a user's ear with the main body portion A being held in the user's hand to answer the telephone, the microphone 21 is positioned in the vicinity of the mouth, which makes it possible for the user to listen to a clear voice and to transmit a clear voice to the other party. In this case, there is a fear that the reverse bending force F3 may be applied to the main body portion A to be bent back, in a state in which the receiver 11 is held to the user's ear. Therefore, when the user further holds the rear surface 1B of the upper housing portion 1, the user can make or answer a phone call in a more stable state.

In Figs. 12A and 12B, in order to prevent the unfolded main body portion A from being further bent in the direction of arrow P, the width W1 of the second connecting member 32 may increase, or the curvature radius R1 may decrease to strength the curve holding force of the second connecting member 32.

Meanwhile, when the folding mobile phone is not used (a call waiting state), folding force stronger than the folding force F1 is applied to the main body portion A such., that the main surface 1A of the upper housing portion 1 faces the main surface 2A of the lower housing portion 2, and the metal member 6B of the belt member 6 is engaged with the engaging portion 4M, which makes it possible to keep the main body portion A folded. When the main body portion A is folded, a curved portion 4F of the fashion cover B is little bent while approaching the third connecting member 33, and the edge winding member 4C is inclined toward the upper and lower housing portions 1 and 2. Therefore, the projected area of the main body portion in the vertical direction with respect to the main surfaces 1A and 2A of the upper and lower housing portions 1 and 2 is reduced to the minimum, and thus the folding mobile phone is handy to carry.

In the folded state of the main body portion A, the thinnest portion (the concave portion) 33B of the third connecting member 33 expands (see Fig. 13), and the central portion of the second connecting member 32 corresponding to the connecting portion 3A is flattened. In this case, force to release the expanding state is applied to the thinnest portion 33B of the third connecting member 33, and force to restore the flat state to the curved state is applied to the central portion 128 of the second connecting member 32. However, as described above, since the metal member 6B provided in the belt member 6 of the first connecting member 31 of the fashion cover B is engaged with the engaging portion 4M, the folded state of the main body portion A is maintained.

Next, an operation of mounting the fashion cover B to the main body portion A will be described below in detail with reference to Figs. 11 and 13.

As shown in Figs. 11 and 13, first, the upper housing portion 1 of the main body portion A is stuck on the upper-housing-portion rear surface portion 4D of the fashion cover B. Then, the fashion cover B is extended in the direction of arrow T such that the curved portion 4F is substantially flattened. The extended state in the direction of arrow T is represented by a two-dotted chain line. The fashion cover B is moved in a direction opposite to the direction of arrow T while engaging the engaging claws 4G formed on the cell cover 4E of the fashion cover B with the grappling claws 2E formed on the main body portion A, thereby mounting the fashion cover B to the main body portion A.

As another method, the upper housing portion 1 of the main body portion A is stuck on the upper-housing-portion rear surface portion 4D of the fashion cover B, and the main body portion A is further bent in the direction of arrow P. Then, an extra length corresponding to the movement of the fashion cover B in the direction of arrow T is ensured. Subsequently, as described above, the fashion cover B is moved in a direction opposite to the direction of arrow T while engaging the engaging claws 4G with the grappling claws 2E formed on the main body portion A, thereby mounting the fashion cover B to the main body portion A.

In this way, the fashion cover B can be easily attached or detached to or from the main body portion A by providing the curved portion 4F in the fashion cover B or expanding the connecting device 3. This operating method is very simple.

When the main body portion A is completely mounted to the fashion cover B, the edge winding portion 4C protrudes from the edge of the main body portion A, and the inner surface of the base member 4A can cover the rear surface (a surface opposite to the main surface 1A) of the upper housing portion 1, and the rear surface (a surface opposite to the main surface 2A) of the lower housing portion 2, without any gap therebetween.

Further, the cell cover portion 4E of the fashion cover B is detachably mounted to the main body portion A. The fashion cover B (or the cell) may be detached from the main body portion A in the reverse order of the mounting operation.

As described above, in the conventional structure, the upper and lower housing portions rotate on the central axis of the hinge device. In contrast, in this embodiment of the invention, two housing portions are connected to each other by a bendable connecting device. In addition, in this embodiment, the connecting device 3 does not protrude from the main surface 1A of the upper housing portion 1 and the main surface 2A of the lower housing portion 2. Therefore, even when a user having a long fingernail operates the operating unit 22, the user's fingernail does not come into contact with the connecting device 3.

Further, according to this embodiment, since the conventional hinge device is not used, it is possible to provide the connecting device 3 having a small volume and size. In order to keep the upper and lower housing portions open, the connecting device 3 includes the second connecting member 32 having an arc-shaped cross section. More specifically, when the main body portion A is unfolded, the second connecting member 32 is arranged with the center of the arc facing the main surface 1A of the upper housing portion 1 (or the main surface 2A of the lower housing portion 2). As a result, the second connecting member 32 is formed in a strip shape that does not occupy much space and has a small thickness and size, and can stably keep the main body portion A unfolded. Therefore, this structure makes it possible to stably perform various operations and to prevent operationality from being lowered.

Furthermore, according to this embodiment, the first connecting member 31 continuously connects the upper and lower housing portions 1 and 2. Therefore, it is possible to obtain unity between the upper and lower housing portions 1 and 2. In addition, the structure of detachably mounting the fashion cover B to the upper housing portion 1 (the same structure as that of the cell cover) makes it possible for the user to freely replace the fashion cover B according to his or her preference, and thus it is possible to provide a folding mobile phone according to the user's preference. Of course, when the fashion cover B is contaminated, the fashion cover B may be detached and washed. Therefore, it is possible to keep the fashion cover B clean.

In recent years, there has been developed a folding mobile phone having a second display unit that is exposed to the outer surface and displays predetermined information, such as received information and time information, even when the folding mobile phone is folded. However, in this embodiment, the second display unit is not provided in the main body portion A.

In this embodiment, the second display unit can also be provided in, for example, the rear surface 1B of the upper housing portion 1. That is, for example, a transparent portion may be provided at a position of the fashion cover B corresponding to the second display unit such that the user can view, for example, characters from the outside, or a third opening may be formed.

In order to prevent a third party from seeing the second display unit, for example, an openable cover may be formed to cover the transparent portion or the third opening portion. When the user views the second display unit, the user may take off the cover to confirm displayed information.

The housing portions and the connecting device (the sheet-shaped member and the bendable member) of the invention are not limited to the upper and lower housing portions 1 and 2 and the first to third connecting members 31 to 33 of the above-mentioned embodiment. For example, the following structure may be used: first connector terminals for connection to electronic parts are provided on the bottoms of two housing portions, serving as units; a bendable member, an antenna, and a flexible wiring member (for example, a flexible substrate) are provided in the sheet-shaped member; second connector terminals for connection to the first connector terminals are provided on the sheet-shaped member; and when the rear surfaces of the two housing portions are fixed to the sheet-shaped member, the first and second connector terminals are connected to each other.

In this embodiment, the fashion cover B can be detached from the main body portion A. However, the following structure may be used: the fashion cover and the second connecting member are integrally formed, and the second connecting member is detached from the main body portion.

Further, in this embodiment, the main body portion A is unfolded in a straight line (at an angle of 180°). However, in the unfolded state of the main body portion A, the second connecting member 32 may be mounted in a flat state, with the upper housing portion and the lower housing portion being arranged at an angle smaller than 180°. In addition, the second connecting member 32 may be formed at a predetermined angle, or it may be mounted to the main body portion A in a curved state such that the main body portion A is unfolded at an arbitrary angle smaller than 180°.

Furthermore, in the above-mentioned embodiment, a spring member is used for the second connecting member in order to reliably keep the main body portion unfolded. However, when a proper degree of stability is satisfied, a spring obtained by bending a steel sheet at a predetermined angle may be used for the second connecting member. Since strong stress is applied to the spring having an arc shape in sectional view, the spring member may be used for a folding mobile phone whose folding or unfolding life span does not matter.
The invention is not limited to the above-mentioned embodiment, but various modifications and changes of the invention can be made without departing from the scope of the invention.

Hereafter, further other embodiment of the invention will be described below in detail with reference to the accompanying drawings. In this embodiment, as a folding mobile terminal apparatus of the invention, a folding mobile phone, which is a kind of folder-type mobile terminal apparatus, will be described.
Fig. 9 is a perspective view illustrating the appearance of a folding mobile phone according to this embodiment of the invention. Fig. 10 is a partial exploded perspective of Fig. 9. Fig. 11 is a partial perspective view illustrating a main body portion shown in Fig. 10, as viewed from the rear side. Figs. 12A and 12B are diagrams illustrating the unfolded state and the folded state of the folding mobile phone according to the invention, respectively. Fig. 13 is a central cross-sectional view illustrating the unfolded state of the folding mobile phone according to the invention. Fig. 14 is a central cross-sectional view illustrating the folded state of the folding mobile phone according to the invention. Fig. 15 is a transverse sectional view illustrating a lower housing portion of the folding mobile phone according to the invention. Fig. 16 is a block diagram illustrating the electrical structure of the main body portion of the folding mobile phone according to the invention.

As shown in Figs. 9 and 10, the folding mobile phone according to this embodiment includes, as main components, a main body portion A and a fashion cover B provided on an outer surface of the main body portion A.

As shown in Figs. 9 to 16, the main body portion A includes a housing composed of an upper housing portion 1 and a lower housing portion 2 and a connecting device 3 which fixes the upper and lower covers 1 and 2 and is bent between the upper and lower housing portions 1 and 2.

The upper housing portion 1 accommodates, for example, an earpiece (receiver) 11, serving as a first voice output unit, a speaker 12 (see Fig. 13), serving as a second voice output unit, a display unit 13, a permanent magnet 14, and a first printed board 15 (see Fig. 13). In addition, for example, an LCD constituting the display unit 13, which will be described later, is mounted on the first printed board 15.

Meanwhile, the upper housing portion 2 accommodates, for example, a mouthpiece (microphone) 21, an operating unit 22, a vibrator unit 23 (see Fig. 13), a camera unit 24 (see Fig. 13), a Hall element 25, a detachable cell 26 (see Fig. 13), and a second printed board 27 (see Fig. 13). In Figs. 13 and 16, the second printed board 27 has, for example, a transmitting/receiving unit 271, a data converting unit 272, a voice processing unit 273, an image processing unit 274, an information storage unit 275, and a control unit 270 mounted thereon.

The upper and lower housing portions 1 and 2 are fixed on the connecting device 3, with a bendable connecting portion interposed therebetween. The connecting device 3 is mainly composed of a sheet-shaped member and a bendable member, and has an antenna 34 and a flexible wiring member (for example, a flexible substrate) 35 provided therein.

Next, components included in the folding mobile phone of this embodiment will be described below in more detail.
Main body portion A
The housing, which is one of the components forming the main body portion A, is composed of the upper housing portion 1 and the lower housing portion 2, as described above. Meanwhile, the connecting device 3, which is one of the components forming the main body portion A, connects an end of the lower surface of the upper housing portion 1 and an end of the upper surface of the lower housing portion 2. The bending of the connecting device 3 causes the main body portion to be bent at the connecting portion 3A (in the direction of arrow P and the opposite direction thereof in Figs. 9 to 13).
That is, when the folding mobile phone is not used, the main body portion A is folded, that is, the upper housing portion 1 is bent with a surface thereof facing (being opposite to) the lower housing portion 2, as shown in Fig. 14. On the other hand, when the folding mobile phone is used, as shown in Figs. 9 and 13, the main body portion A is unfolded such that a user's face is opposite to the upper housing portion 1 and the lower housing portion 2.

### (1) Upper housing portion 1

The receiver 11, which is an earpiece, is provided on a main surface 1A of the upper housing portion 1 which is opposite to the lower housing portion 2 in the folded state of the main body portion A such that a voice is output from the main surface 1A. When the folding mobile phone of this embodiment is normally used, the voice of the other part communicating with the user is output from the receiver 11. Meanwhile, in Fig. 13, the speaker 12 is provided on a rear surface 1B of the upper housing portion 1 opposite to the main surface 1A, and outputs a ring tone from the rear surface 1B in the standby state of a mail or phone call. The receiver 11 or the speaker 12 has, for example, a first permanent magnet (not shown), a coil portion (not shown), and a diaphragm (not shown) provided therein. In the receiver 11 or the speaker 12, when a current passes through the coir portion, the diaphragm provided in the first permanent magnet vibrates, which causes a sound to be generated.

The display unit 13 is provided in a portion of the main surface 1A of the upper housing portion 1 leaning closer to the connecting portion 3A than the receiver 11. In addition, a window frame 13A is formed on the main surface 1A of the upper housing portion so as to correspond to the display unit 13, and a transparent window 13B is bonded to the window frame 13A. Therefore, a user can see, for example, characters displayed on the display unit 13 through the transparent window 13B from the outside of the upper housing portion 1. The display unit 13 can be composed of, for example, a liquid crystal display device (LCD), and displays, for example, characters, symbols, numbers, images, and maps.

The permanent magnet 14 for a housing is provided in the vicinity of the lower end of the lower housing portion 1 (in the vicinity of the connecting device 3).
The receiver 11, the speaker 12, and the display unit 13 are mounted on the first printed board 15 so as to be electrically connected to the control unit 270, as shown in Fig. 16.

### (2) Lower housing portion 2

The microphone 21, which is the mouthpiece, and the operating unit 22 are provided on a main surface 2A of the lower housing portion 2 that is opposite to the main surface 1A of the upper housing portion 1 when the main body portion A is folded.

The microphone 21 is provided close to an end of the lower housing portion opposite to another end thereof facing the connecting portion 3A.

A finger F of a user who operates the operating unit 22 is represented by two-dotted chain lines in Fig. 13. The user can operate the operating unit 22 to perform a ring up or ring off operation, an operation of adjusting the volume of a ring tone output from the receiver 11 or the speaker 12, an operation of inputting characters, symbols, or numbers, an operation of driving a camera unit 24, and a switching operation to a manner mode. Unlike the related art, in this embodiment, a hinge portion that has a substantially cylindrical shape in cross-sectional view and protrudes from the main surface 2A toward the upper direction is not provided in front of the finger of the user. Therefore, for example, even when the user's fingernail is long, the user can easily operate the operating unit 22.

The vibrator unit 23 starts operating when a phone call is received to inform the user of the reception of the call.

The camera unit 24 is provided on a rear surface 2B (see Fig. 13) of the lower housing portion 2 opposite to the main surface 2A in parallel to the cell 26 detachable from the lower housing portion 2, and is capable of capturing the image of a subject positioned at the rear side of the operating unit 22. Incident light from the subject captured by the camera unit 24 passes through a lens group and is converted from an optical signal into an electric signal by a photoelectric conversion element, such as a CCD (charge coupled device), thereby generating image information. In Fig. 16, the image information is processed by an image processing unit 274, which will be described later, and is then displayed on the display unit 13 as an image.

Therefore, the camera unit 24 and the display unit 13 are connected to the image processing unit 274, and the image information obtained by the camera unit 24 is stored in an information storage unit 275, which will be described later, through a predetermined operation. Further, the information storage unit 275 can store, in addition to the image information, information on telephone numbers, voice information, image information (for example, received image information) other then the image information on the captured image, and information on transmitted or received mail or characters currently being written.

The Hall element 25 is a unit for detecting the magnetic field of the permanent magnet 14 for a housing, and is provided on the second printed board 27 so as to be opposite to the permanent magnet 14 when the main body portion A is folded.
Since the Hall element 25 is arranged close to the permanent magnet 14 for a housing when the main body portion A is folded, it detects the magnetic field of the permanent magnet 14 to output a detection signal to a control unit 270, which will be described later. On the other hand, when the main body portion A is unfolded, the permanent magnet 14 for a housing is separated from the Hall element 25. In this case, the Hall element 25 cannot detect the magnetic field of the permanent magnet 14, so that it does not generate the detection signal.

That is, when the Hall element 25 detects the magnetic field of the permanent magnet 14 for a housing, the main body portion A is in a folded state. On the other hand, when the Hall element 25 does not detect the magnetic field of the permanent magnet 14 for a housing, the main body portion A is in an unfolded state. In the folding mobile phone of this embodiment, when the housing is folded, no image is displayed on the display unit 13 in a standby state, so that power is not consumed. In addition, in the folded state, an illuminating unit (not shown) for illuminating the display unit does not emit light. On the other hand, when the housing is unfolded, for example, a mark indicating received electric field strength, information on a battery level, time information, and information on an incoming call are displayed on the display unit 13, and the illuminating unit is turned on to emit light.

When the Hall element 25 detects the magnetic field of the permanent magnet 14 for a housing, it is necessary to reliably detect the folded state even when a positional deviation occurs between the opposing surfaces of the two housing portions 1 and 2 in the rotational direction or the longitudinal direction (the X direction of Fig. 19) or a very small clearance occurs between the opposing surfaces of the housing portions. That is, in the folded state of the main body portion A, when it is detected that the housing portions 1 and 2 are unfolded due to a positional deviation between the opposing surfaces of the two housing portions 1 and 2 in the rotational direction or the longitudinal direction or a very small clearance between the opposing surfaces of the housing portions, a backlight for a liquid crystal device is turned on, causing power consumption. When a device operated only in the folded state is provided, the positional deviation between the housing portions 1 and 2 generated when the device is operated or unfolding may hinder the use of the folding mobile phone.

In this embodiment, the amount of a positional deviation between the opposing surfaces of the two housing portions 1 and 2 in the rotational direction or the longitudinal direction is previously defined, and the Hall element 25 and the permanent magnet 14 for a housing are arranged at a position where the Hall element 25 can detect the magnetic field of the permanent magnet 14 for a housing even when a positional deviation or a very small clearance occurs between the opposing surfaces.

Figs. 18A to 21 show the arrangement between the permanent 14 and the Hall element 25 capable of reliably detecting the folded state even when a positional deviation or a very small clearance occurs between the opposing surfaces of the two housing portions 1 and 2 in the rotational direction.

In this arrangement, the Hall element 25 and the permanent magnet 14 for a housing are arranged close to the connecting portion 3A. More specifically, in the folded state of the main body portion A, the Hall element 25 and the permanent magnet 14 for a housing are arranged closer to the connecting portion 3A than to a center line Y of the main body portion A. Preferably, the Hall element 25 and the permanent magnet 14 for a housing are arranged closer to the connecting portion 3A than to a curvature radius R1 that is half a curvature radius R2 where the two housing portions 1 and 2 deviate from each other in the rotational direction.

Fig. 18A is a diagram illustrating the folded state of the main body portion, and Fig. 18B is a right-side diagram of Fig. 18A. Fig. 19 is a diagram illustrating a state in which the upper housing portion deviates from the lower housing portion in the X direction by ΔX. Fig. 20 is a diagram illustrating a state in which the upper housing portion rotates on the center O in the P direction by ΔP in the folded state. Fig. 21 is a diagram illustrating a state in which the main body portion is folded with a very small clearance between the leading ends of the housing portions.

In Fig. 19, a point A1 indicates the position of the Hall element 25 of this embodiment. A point B1 indicates the position of the permanent magnet 14 for a housing of this embodiment. As an example in which the permanent magnet 14 and the Hall element 25 are arranged at positions different from those in this embodiment, for example, a point A2 indicates the position of the Hall element arranged at the leading end of the upper housing portion 1, and a point B2 indicates the position of the permanent magnet arranged at a position opposite to the position A2 of the Hall element when the two housing portions are folded.

At that time, the upper housing portion 1 deviates from the lower housing portion 2 in the X direction, which is the longitudinal direction, by ΔX. In this case, a distance L1 between the point A1 and the point B1 is equal to a distance L2 between the point A2 and the point B2. Therefore, when the housing deviates in the X direction, a gap between the Hall element and the permanent magnet always occurs regardless of the arrangement positions of the Hall element and the permanent magnet (ΔX = L1 = L2).

Fig. 20 shows a state in which the upper housing, portion 1 rotates on the axial center O with respect to the lower housing portion 2 in the direction of arrow by ΔP. In this case, a distance L3 between the point A1 and the point A2 is shorter than a distance L4 between the point A2 and the point B2. That is, when the positional deviation between two housing portions occurs in the rotational direction, it is possible to reduce the gap between the Hall element and the permanent magnet to the minimum since the points A1 and B1 are close to the rotational center O (L3 < L4).

Fig. 21 shows the folded state of the housing portions in which the upper housing portion 1 rotates on an axis O with respect to the lower housing portion 2 in the direction of arrow by ΔR and a very small clearance occurs between the leading ends of the housing portions. In this case, a distance L5 between the point A1 and the point B1 is shorter than a distance L6 between the point A2 and the point B2. That is, when the positional deviation between two housing portions occurs in the rotational direction, it is possible to reduce the gap between the Hall element and the permanent magnet to the minimum since the points A1 and B1 are close to the rotational center (L5 < L6).

As described above, in this embodiment, the permanent magnet and the Hall element are arranged in the vicinity of the connecting member, which makes it possible to reliably detect the folded state of the main body portion even when a positional deviation between the housing portions occurs by external force when the main body portion is folded such that the two housing portions overlap each other. In this way, in the folded state of the housing, the unfolding of the housing is not detected, and thus a backlight for a liquid crystal device is not turned on, which results in the prevention of unnecessary power consumption. When a device operated only in the folded state is provided, the use of the folding mobile phone is not interrupted by the positional deviation between the housing portions generated when the device is operated or unfolding. In addition, according to this embodiment, it is possible to use a permanent magnet having weak magnetic force, and thus to prevent the damage of a magnetic card inserted between the housing portions.

Further, in order to widen the detection region of the Hall element 25 with respect to the magnetic field of the permanent magnet 14 for a housing, the Hall element 25 and the permanent magnet 14 for a housing may increase in area or number.

The vibrator unit 23, the operating unit 22, the microphone 21, the camera unit 24, the Hall element 25, and the cell 26 are mounted on the second printed board 27 so as to be electrically connected to the control unit 270.

As shown in Fig. 16, the control unit 270 is connected to the transmitting/receiving unit 271, the data converting unit 272, and the information storage unit 275 as well as to the vibrator unit 23, the operating unit 22, the Hall element 25, and the display unit 13 to control these units. The control unit 270 is also connected to the cell 26.

The transmitting/receiving unit 271 is connected to the antenna 34, and processes data received by the antenna 34 to output the data to the data converting unit 272. The data converting unit 272 is connected to the voice processing unit 273, and the voice processing unit 273 is connected to the receiver 11, the speaker 12, and the microphone 21.

The data converting unit 272 converts the data transmitted through the transmitting/receiving unit 271 and the control unit 270 from the antenna 34 into voice data and outputs the voice data to the voice processing unit 273. Meanwhile, the voice processing unit 273 decodes the voice data to generate a voice signal and outputs the voice signal to the receiver 11 or the speaker 12. Then, the receiver 11 or the speaker 12 outputs a voice corresponding to the voice signal transmitted from the voice processing unit 273.

Further, the voice processing unit 273 encodes a voice received by the microphone 21 to generate voice data and outputs the generated voice data to the data converting unit 272. The data converting unit 272 converts the input voice data into communication data and outputs the communication data to the transmitting/receiving unit 271. The transmitting/receiving unit 271 processes the received communication data and transmits the processed data as radio waves by using the antenna 34.

### (3) Connecting device 3

The connecting device 3 is bent when the main body portion A is folded, and is unbent when the main body portion A is unfolded. That is, the connecting device 3 has flexibility, and includes a sheet-shaped member for fixing the upper and lower housing portions 1 and 2 with the connecting portion 3A, which is a central portion, interposed therebetween, and a bendable member that has enough restoring force and rigidity to return a bent state to a flat state (a state before bending) and is fixed to the upper and lower housing portions 1 and 2.
As shown in Fig. 13, the connecting device 3 of this embodiment includes a first connecting member 31, a second connecting member 32, and a third connecting member 33. Among them, the first connecting member 31 and the third connecting member 33 form the sheet-shaped member, and the second connecting member 32 forms the bendable member.

Further, the second connecting member 32, the antenna 34, and the flexible wiring member 35 are provided in a space between the first connecting member 31 and the third connecting member 33. One end (a power supply portion 34A) of the antenna 34 is connected to a power supply portion of the second printed board 27, and the other end thereof extends toward the upper housing portion 1. The flexible wiring member 35 having a linear shape overlaps the second connecting member 32, and has one end connected to the first printed board 15 through a connector 35A and the other end connected to the second printed board 27 through a connector 35B.

As described above, the first connecting member 31 constitutes the connecting portion 3A for connecting the upper and lower housing portions 1 and 2 together with the third connecting member 33. In particular, the first connecting member 31 of this embodiment forms the surface of the connecting portion 3A (a surface facing the same direction as that in which the main surface 1A of the upper housing portion 1 and the main surface 1B of the lower housing portion 2 face) and is connected to the outer surface of the upper housing portion 1 and the outer surface of the lower housing portion 2 (is also used as the outer surfaces of the upper and lower housing portions 1 and 2).

The second connecting member 32 is provided so as to be laid across the upper housing portion 1 and the lower housing portion 2. The second connecting member 32 is formed of a thin sheet of steel having flexibility and rigidity (for example, carbon tool steel or stainless steel).

The third connecting member 33 is integrally connected to the rear surface 2B of the lower housing portion 2, and is mounted to the first connecting member 31 so as to cover the second connecting member 32 and the flexible wiring member 35.

Further, the first connecting member 31 and the third connecting member 33 are formed of a proper material having flexibility, such as thermoplastic polyester ether elastomer or polyurethane resin. In addition, a material forming the first connecting member 31 and the third connecting member 33 is not limited to the above-mentioned material. For example, any material can be used for the first and third connecting members 31 and 33 as long as it has flexibility and rigidity.

Inner surfaces 1D and 2C of the main surfaces 1A and 2A of the upper and lower housing portions 1 and 2 formed by the first connecting member 31 are formed of a material, such as an ABS resin, different from that forming the main surfaces 1A and 2A. That is, the upper housing portion 1 and the lower housing portion 2 are integrally formed by a different material molding method (for example, an inserting molding method) for integrally forming a product with different kinds of materials.

The reason why the first and second housing portions 1 and 2 are integrally formed with the first connecting member 31 of the connecting device 3 by the different material molding method will be described below.
As shown in Figs. 13 and 14, the third connecting member 33 is fixed to the board 27 by driving a tapping screw 331A into a hole 332A formed in the inner surface 2D of the lower housing portion 2. In a case in which the tapping screw is tightened with a predetermined clamping torque in order to obtain a predetermined axial force (clamping force), when the allowable shear stress of the hole 332A is weak, the holes 332A is damaged.
It has been known that, in general, the allowable shear stress of ABS resin is stronger than that of a thermoplastic polyether ester elastomer. Therefore, in this embodiment, the hole 332A provided in the inner surface 2D of the lower housing portion 2 (which is connected to, for example, the operating unit 22) is formed of the ABS resin, which prevents the damage of the hole 332A when the screw is tightened.

However, when the main surface 1A of the upper housing portion 1 and the window frame 13A are formed of the thermoplastic polyether e-ster elastomer, the transparent window 13B is not fixedly adhered to the window frame 13A by an adhesive tape since the thermoplastic polyether ester elastomer generally has weak adhesion. In this case, for example, when the folding mobile phone is dropped, the transparent window 13B may be separated from the window frame 13A.

From this point of view, in this embodiment, in order to solve the above-mentioned problem, the outer surfaces 1A and 2A (actually, formed by the first connecting member 31) of the upper and lower housing portions 1 and 2 formed of a thermoplastic polyether ester elastomer are integrally formed with the window frame 13A formed of ABS resin. In addition, it is possible to form a curvature radius R1 (see Fig. 13) in connecting portions between the first connecting member 31 and the upper and lower housing portions 1 and 2 by integrally forming the outer surfaces of the upper and lower housing portions 1 and 2 with the first connecting member 31, thereby obtaining unity between the upper and lower housing portions 1 and 2 and the first connecting member 31. More specifically, in a case in which the unfolded main body portion A is further bent back, when these members are not integrally formed, the curvature radius is not formed in these members, so that a gap occurs between the upper and lower housing portions 1 and 2. The gap causes the unity not to be obtained. In addition, water may permeate through the gap, and thus separate formation is not preferable for a mobile terminal apparatus not having water resistance.

The first connecting member 31 is not necessarily integrally formed with the upper and lower housing portions 1 and 2 by the different material molding method. For example, the first connecting member 31, the outer surfaces of the upper and lower housing portions 1 and 2, and the inner surfaces of the upper and lower housing portions 1 and 2 may be separately formed from one another, and the first connecting member 31 may be fixed to the inner surfaces of the upper and lower housing portions 1 and 2 by a mechanical coupling means (for example, a screw or an adhesive). In addition, even when the upper and lower housing portions 1 and 2 and the first connecting member 31 are formed of the same material (for example, thermoplastic polyether ester elastomer), the third connecting member 33 may be fixed to the upper and lower housing portions 1 and 2 or the transparent window 13B may be fixed to the window frame 13A by proper methods other than the above-mentioned method.

Next, the second connecting member 32 forming the bendable member of the connecting device 3 will be described below in detail, mainly referring to Figs. 12A and 12B.
Figs. 12A and 12B are diagrams illustrating the second connecting member 32 of the connecting device 3 of the main body portion A. Fig. 12A is a diagram illustrating the unfolded state of the connecting device 3 of the main body portion A, and Fig. 12B is a diagram illustrating the folded state of the connecting device 3 of the main body portion A.

As shown in Figs. 12A to 14, the second connecting member 32 is a thin plate extending in a straight line from the upper housing portion 1 to the lower housing portion 2 and having a curved portion 323 having an arc shape in sectional view. The curved portion 323 has a width W1 and a curvature radius R2. The center of the curvature radius R2 is placed at the main surface 1A of the upper housing portion 1 (or the main surface 2A of the lower housing portion 2), and the center is represented by a point O (Fig. 12A). In addition, the second connecting member 32 has through holes 320 (see Fig. 22) substantially at the center of the arc in the vicinity of both ends thereof, and is fixed to the leading ends of bosses 322 provided on the inner surfaces of the upper and lower housing portions 1 and 2 by screws 321.

As shown in Fig. 12A, when the connecting device 3 of the main body portion A is in the unfolded state, the second connecting member 32 extends in a straight line from the upper housing portion 1 to the lower housing portion 2, with the arc having the curvature radius R2 being maintained from one end thereof to the other end, so that a stable state is maintained. In this state, even when the connecting device 3 of the main body portion A in the unfolded state (Fig. 9) is further bent in a direction opposite to the direction of arrow P, since the second curved connecting member 32 has a high degree of rigidity in a direction where the curved state is released (the unfolded main body portion A is further bent), force to maintain the unfolded state is generated (hereinafter, referred to as 'curve maintaining force'). Therefore, force (reverse bending force) required for bending the main body portion in a direction where the unfolded main body portion A is further bent back, that is, a direction of a convex curved surface (positive curved surface) opposite to a concave curved surface (negative curved surface) is considerably stronger than force required for bending the main body portion in the direction of arrow P, which makes it difficult for the main body portion to be bent. The anti-bending force is determined by the secondary moment of the cross section or the Young's modulus.

In contrast, when the main body portion is bent in the direction of arrow P (see Fig. 13) by force stronger than a predetermined force, the central portion of the second connecting member 32 is bent in a direction where the main body portion A is folded by jumping, but plastic deformation does not occur therein. That is, when force applied is released, the central portion of the second connecting member returns to the flat state by restoring force, which causes the connecting device,3 of the main body portion A to return to the unfolded state. In order words, the second connecting member 32 also functions as a means for preventing the main body portion A from easily being bent in the direction of arrow P.

As shown in Fig. 12B, when the connecting device 3 of the main body portion A is folded, the second connecting member 32 is bent at the connecting portion 3A, which is a central portion between the upper housing portion 1 and the lower housing portion 2. In this case, the sectional shape of the connecting portion 3A, which is a central portion of the second connecting member 32, is elastically deformed from the arc shape to a linear shape, causing a width W2 of the connecting portion 3A to be larger than the width W1 before the elastic deformation. Both ends of the connecting portion 3A are elastically deformed close to a flat shape.

When the connecting portion 3A is elastically deformed, force to return to the arc shape and the linear shape is generated from the second connecting member 32. That is, when the connecting device 3 of the main body portion A is folded, the second connecting member 32 is bent while receiving the force to return to the linear shape (the force to restore the width W2 to the width W1).

In this embodiment, the second connecting member 32 is formed of a copper plate having a thickness of 0.1 mm, a width W1 of 20 mm, and a curvature radius R1 of R25 mm, and a distance L1 between the upper housing portion 1 and the lower housing portion 2 is 30 mm.

Similar to when the unfolded main body portion is further bent in a direction opposite to the direction of arrow P, the maximum stress occurs at the time of jumping.
Therefore, the width W1 and the curvature radius R1 may be determined such that the stress occurring at the time of jumping does not exceed allowable stress of a selected material.

In the second connecting member 32 of this embodiment, bending starting force (folding force, which will be described later) F1 when the unfolded connecting device 3 starts to be bent in the direction of arrow P is about 0.6 [N (Newton)]. When the connecting device 3 of the main body portion A is folded, restoring force F2 to restore the connecting device 3 of the main body portion A to the unfolded state is about 1.5 [N]. In addition, force required to further bend the unfolded connecting device 3 of the main body portion A in the direction of arrow P ('reverse bending force', which will be described later) F3 is about 2 [N].

The second connecting member 32 which has an arc shape in sectional view and is provided such that the center O of the arc is positioned on the main surface 1A of the upper housing portion 1 is used as the bendable member of the connecting device 3. As a result, it is possible to make the force F3 to reversely bend the connecting device (this is referred to as 'reverse bending force'), which is not generally used, stronger than the force F1 required for a user to generally operate the main body portion (force required to fold the main body portion (this is referred to as 'folding force')).
Therefore, when the folding force F1 or the reverse bending force F3 is appropriately set, it is possible to easily fold the unfolded main body portion A. In addition, it is possible to prevent the unfolded connecting device 3 from being reversely bent, and thus to provide the connecting device 3 capable of improving the convenience of users.

Figs. 22 to 25 are diagrams illustrating an example in which both ends of the second connecting member 32 are screwed to the corresponding bosses 322 of the upper and lower housing portions 1 and 2.
The through holes 320 are provided substantially in the center of the arc in the vicinities of both ends of the second connecting member 32, and the second connecting member 32 is fixed to the leading ends of the bosses 322 provided on the inner surfaces of the upper and lower housing portions 1 and 2 by screws 321. In this case, as shown in Fig. 23, spherical portions 324 are formed at the leading ends of the bosses 322. Therefore, when the curved portion 323 of the second connecting member 32 is straightened (two-dotted chain line of Fig. 23) or curved at the time of folding or unfolding, the second connecting member 32 does not come into contact with the edges of the leading ends of the bosses 322. When the main body portion is folded, a curvature radius R formed by the curved portion of the second connecting member 32 is formed along the spherical portion. The curvature radius R is zero (or close to a right angle) at the edges, which causes the maximum stress to occur at the time of folding. Therefore, the structure in which the curvature R is formed along the spherical portion makes it possible to improve the durability of the second connecting member 32. In addition, as shown in Fig. 24, the second connecting member 32 is also bent in the longitudinal direction when the upper and lower housing portions 1 and 2 are folded or unfolded. Therefore, as shown in Fig. 25, by forming R portions 325 formed in the inner portions of the leading ends of the bosses 322, opposite to each other, that are provided on the inner surfaces of the upper and lower housing portions 1 and 2, it is possible to prevent the second connecting member 32 from coming into contact with the edges of the leading ends of the bosses 322 when the upper and lower housing portions 1 and 2 are folded or unfolded. Thus, it is possible to improve the durability of the second connecting member 32.

Next, a supplementary description of the third connecting member 33 will be made below.
As shown in Figs. 13 and 14, in the third connecting member 33, one surface (outer surface) of a portion corresponding to the connecting portion 3A is recessed in the lengthwise direction thereof over a predetermined length L1 (see Fig. 14), thereby forming a thin portion (which forms a folding force generating means) 33A. A thinnest portion (a concave portion; which also forms a folding force generating means) 33B is provided in the center of the thin portion 33A in a linear shape along a width direction (a depth direction in Figs. 13 and 14).

The entire thin portion 33A can be easily bent in the direction where the main body portion A is folded by forming the thin portion 33A and the thinnest portion 33B in the main body portion A. When the main body portion A is folded, the thin portion 33A is bent with a distance from the first connecting member 31 being narrowed, while expanding a little. At the same time, the thinnest portion 33B is linearly curved along the width direction where the thinnest portion 33B is formed, while uniformly expanding. When the expansion angle of the thinnest portion 33B before the third connecting member 33 shown in Fig. 13 expands (before the main body portion A is folded) is referred to as 'θ', the expansion angle of the thinnest portion 33B after the third connecting member 33 shown in Fig. 14 expands (after the main body portion A is folded) is θ + Δ.

In the folded state of the main body portion A, when the upper housing portion 1 is intentionally turned with respect to the lower housing portion 2 in the direction of arrow α shown in Fig. 12B, the expansion angle of the third connecting member 33 becomes non-uniform. When the intentional turning is released, the expansion angle becomes uniform. That is, when the main body portion A is folded, the thinnest portion 33B of the third connecting member 33 regulates the bending position of the connecting portion 3A. Therefore, when the thinnest portion 33B of the third connecting member 33 is not provided, there is a fear that, when the main body portion A is folded, the upper housing portion 1 may be arbitrarily turned in the direction of arrow α with respect to the lower housing portion 2.

As described above, the flexible wiring member 35 overlaps the second connecting member 32. When the intentional turning occurs, the flexible wiring member 35 is also twisted.

The above will be described below with reference to the drawings. Figs. 17A and 17B are front views illustrating the positional relationship between the second connecting member and the flexible wiring member when the upper housing portion deviates from the lower housing portion. More specifically, Fig. 17A shows a state in which the flexible wiring member overlaps on the proximal side of the second connecting member, and Fig. 17B shows a state in which the flexible wiring member is arranged on the right side of the second connecting member (two members do not overlap each other). In Fig. 17A, as described above, since the flexible wiring member 35 overlaps the second connecting member 32, the second connecting member 32 and the flexible wiring member 35 are twisted by the same degree of magnitude when the upper housing portion 1 deviates from the lower housing portion in the counterclockwise direction by an angle of about 90°. In Fig. 17B, when the upper housing portion 1 deviates from the lower housing portion in the counterclockwise direction by an angle of about 90°, the second connecting member 32 composed of a copper plate does not expand or contract, but is only twisted. Meanwhile, the flexible wiring member 35 is twisted while rotating on the second connecting member 32, so that the connector 35A of the flexible wiring member 35 is positioned on the depth side of the second connecting member 32. Since the flexible wiring member 35 does not expand or contract, the position of the connector 35A is lower than that shown in Fig. 17A by a distance β.

Therefore, in the latter case, torsion (stress) and tensile stress are applied to the flexible wiring ember 35. As a result, tensile stress is also applied to the connectors 35A and 35B, which causes the connectors 35A and 35B to be detached from the first printed board 15 and the second printed board 27 or to be damaged. In this case, the flexible wiring member may be broken. Therefore, the flexible wiring member 35 is arranged so as to overlap the second connecting member 32 in order to solve the above-mentioned unexpected problems.

In this structure, when the flexible wiring member 35 is provided on the concave side of the curved portion 323, it is possible to reduce the thickness of an overlapping structure of the second connecting member 32 and the flexible wiring member 35. On the other hand, when the flexible wiring member 35 is provided on the convex side of the curved portion 323, it is possible to widen the width of the flexible wiring member 35.

Further, when the main body portion A is folded, force to restore the first and third connecting members 31 and 33 to the linearly unbent states is generated. However, since the restoring force is considerably weaker than the force F2 generated from the second connecting member 32 formed of a thin copper plate (hereinafter, referred to as 'restoring force'), the folding or unfolding force of the main body portion A is almost determined by only the second connecting member 32. This is similarly applied when the main body portion A is folded and at the time of expansion. That is, in these cases, the restoring force also depends on only the second connecting member 32.

When the main body portion A is unfolded, the first to third connecting members 31 to 33 are unbent in a straight line, and this unbent state is maintained by the rigidity of the second connecting member 32. That is, when the lower housing portion 2 is held in a user's hand, the upper housing portion 1 is kept open. Therefore, the upper housing portion 1 is not bent in the direction of arrow P and in a direction opposite to the direction of arrow P. Thus, it is possible to easily fold the main body portion A.

Since the connecting portion 3A is flush with the rear surface 1B of the upper housing portion 1 and the rear surface 2B of the lower housing portion 2, a curvature radius R3 (see Fig. 14) formed by the connecting portion 3A when the main body portion A is folded is substantially equal to half the sum of the thickness of the upper housing portion 1 and the thickness of the lower housing portion 2.
Therefore, when the main body portion A is folded, the antenna 34 and the flexible wiring member 35 provided in the connecting portion 3A are also bent. However, since the curvature radius R3 is sufficiently large, storing stress does not occur in the antenna 34 and the flexible wiring member 35.
As a result, it is not necessary to use members having a long bending life span and high durability for the antenna 34 and the flexible wiring member 35. In addition, when the main body portion A is folded or unfolded, the antenna 34 and the flexible wiring member 35 are provided as shown in Figs. 12A and 12B.

Next, the fashion cover B will be described below in detail with reference to Figs. 9 to 15.
As shown in Figs. 10, 13, 14, and 15, the fashion cover B includes a base member 4A; an appearance portion 4B which covers the outer surface of the base member 4A and is formed of a fashionable material (integument), such as a natural fiber (cotton and flax), a synthetic fiber (acryl, nylon, and urethane), or a leather material; and an edge winding portion 4C which is made of the same material as that forming the appearance portion 4B and is provided on the outer peripheral surface of the base member 4A so as to be connected to the appearance portion 4B.

The base member 4A is formed of a proper material having flexibility, such as thermoplastic polyester ether elastomer or polyurethane resin. An upper-housing-portion rear surface portion 4D forming the rear surface 1B of the upper housing portion 1 and a cell cover portion 4E covering the cell 26 are made of an ABS resin and are integrally formed on the inner surface of the base member 4A. That is, the base 4A is also formed by a different material molding method. When the rear surface of the base member 4A is mounted on the upper and lower housing portions 1 and 2, a curved portion 4F is provided at the center of the base member 4A in order to form a bendable projecting portion protruding from the upper and the lower housing portions 1 and 2 to the outside. Holes 332B are formed in the upper-housing-portion rear surface portion 4D, and the upper-housing-portion rear surface portion 4D is fixed to the upper housing portion 1 by driving tapping screws 331B into the holes 332B. Engaging claws 4G (four claws), serving as engaging units, formed on the cell cover portion 4E of the base member 4A are detachably mounted to grappling claws 2E (four claws in Fig. 11) formed on the lower housing portion 2. When the inner surface of the base member 4A (the rear surface of the appearance portion 4B) is mounted to the main body portion A, the connecting portion 3A is separated from the curved portion 4F.

The appearance portion 4B (integument) provided on the outer surface of the base member 4A is previously adhered to the base member 4A in order to prevent the integument 4B from moving relative to the base member 4A. Then, a belt member 6 is sewed to the base member 4A and the integument 4B with a thread 7A, and the edge winding member 4C is sewed to the base member 4A and the integument 4B with a thread 7B. When the edge winding portion 4C is sewed, in order to press a material by a sewing machine and to transfer the material, a flat portion protruding from the edge of the base member 4A by a predetermined distance L2 is needed. In this embodiment, the distance L2 is ensured. In addition, a curved portion exists within the distance L2, but it is flatted at the time of sewing since the base member 4A is formed of a flexible material as described above.

This embodiment is described with reference to Fig. 15. When the rear surface of the base member 4A is mounted to the main body portion A, the base member 4A protrudes from the edge of the main body portion A, with the edge winding portion 4C falling to the outside. The edge winding portion 4C before the falling is represented by a two-dotted chain line. The protruding edge winding portion 4C has flexibility, as described above, so that it is bent toward the upper and lower housing portions 1 and 2. When the upper and lower housing portions 1 and 2 are held in a user's hand, the edge winding portion 4C can be deformed so as to be bent toward the upper and lower housing portions 1 and 2, so that the user does not feel the main body portion A being wide at the time of holding. Fig. 15 shows a state in which the user holds the lower housing portion 2 in his or her hand, and the user's hand is represented by a character 'G'. Since only the appearance portion 4B comes into contact with the user's hand G, the user feels only the touch of the appearance portion 4B. Therefore, when the appearance portion 4B is formed of a soft material, it is possible to make the user feel softer, as compared with a conventional structure in which it is formed of resin (a hard material).

The appearance portion 4B has a first opening 4H through which a voice is output from the speaker 12 and a second opening 4J formed to correspond to the position of the camera 24. The integument 4B is attached to the base member 4A and is then sewed, as described above. The attachment before sewing makes it possible to stabilize the sewing position and to prevent the appearance portion 4B from moving (deviating) relative to the base member 4A at the time of holding. Therefore, it is possible to prevent the fashion cover from covering the camera unit 24 due to the positional deviation occurring when the user holds the folding mobile phone to take a picture by using a camera function. In addition, this structure makes it possible for a user to hold the folding mobile phone without feeing incongruous.

Further, a belt member 6 is sewed, at its one end, onto one end (in the vicinity of the rear surface of the cell cover) of the appearance portion 4B of the fashion cover B. The belt member 6 has a magnetic metal member 6B at the other end thereof, and a convex portion 6C is formed in the center of the metal member 6B. In addition, an engaging portion 4M having a second permanent magnet 4K therein is provided at the other end of the appearance portion 4B (in the vicinity of the rear surface of the receiver), and a concave portion 4L is formed in the center of the engaging member 4M.

In this way, when the main body portion A is folded, the belt member 6 is bent to engage the metal member 6B with the engaging member 4M provided in the vicinity of the other end of the appearance portion 4B. In the folded state of the main body portion A, the edge winding portion 4C falls toward the main body portion A, and the belt member 6 is bent while extending to engage the metal member 6B with the engaging unit 4M, so that the main body portion A is folded with little gap.

When the main body portion A is folded in this way, the restoring force F2 of the second connecting member 32 causes the main body portion A to be unfolded. However, since the metal member 6B is engaged with the engaging unit 4M, it is possible to prevent the main body portion A from being unfolded even when the restoring force F2 is applied to the main body portion A.

Further, the engagement between the metal member 6B and the engaging member 4M may be released by lifting up the leading end of the belt member 6 in the direction of arrow S. That is, when force to pull out the convex portion 6C from the concave portion 4L is applied, the engagement is easily released. In the engaged state, when the restoring force F2 is applied to the main body portion A, the convex portion 6C is just inclined in the radius direction of the concave portion 4L. Thus, the convex portion does not easily come out from the concave portion. The folded state of the main body portion A may be maintained by setting the restoring force F2 of the second connecting member 32 to be weaker than that generated by the weight of the upper housing portion 1 or the lower housing portion 2 when the main body portion A is folded, without using the belt member 6.

Alternatively, the concave portion 4L may be formed in the metal member 6B of the belt member 6, and the convex portion 6C may be formed on the other side of the appearance portion 4B to engage the two members.

Next, the operation of the folding mobile phone according to the embodiment will be described below in detail.
In the folding mobile phone having the above-mentioned structure according to this embodiment, when the folding mobile phone is not used, the belt member 6 is fastened to maintain the connecting portion 3A to be bent, with the upper housing portion 1 overlapping the lower housing portion 2. On the other hand, when the engagement between the metal member 6B of the belt member 6 and the engaging portion 4M is released to use the folding mobile phone, the main body portion A is unfolded by the restoring force F2 of the second connecting member 32 to return to a substantially flat state, and the unfolded state of the main body portion is stably maintained by the curve holding force (action) of the second connecting member 32.

Therefore, in the stable unfolded state of the main body portion A, for example, making or receiving a phone call, reading mail through the display unit 13, or operating the operation unit 22 to write a letter can be performed. In this case, even when the user views the display unit 107 with a hand holding the lower housing portion 2, the upper housing portion 1 is not bent back by the curve holding force (rigidity) of the second connecting member 32. Therefore, the user can hold the folding mobile phone only in one hand to use it, without feeling inconvenient.

Further, when the main body portion A is unfolded, the gap between the receiver 11 and the microphone 21 becomes largest. In this state, when a receiver is held to a user's ear with the main body portion A being held in the user's hand to answer the telephone, the microphone 21 is positioned in the vicinity of the mouth, which makes it possible for the user to listen to a clear voice and to transmit a clear voice to the other party. In this case, there is a fear that the reverse bending force F3 may be applied to the main body portion A to be bent back, in a state in which the receiver 11 is held to the user's ear. Therefore, when the user further holds the rear surface 1B of the upper housing portion 1, the user can make or answer a phone call in a more stable state.

In Figs. 12A and 12B, in order to prevent the unfolded main body portion A from being further bent in the direction of arrow P, the width W1 of the second connecting member 32 may increase, or the curvature radius R1 may decrease to strength the curve holding force of the second connecting member 32.

Meanwhile, when the folding mobile phone is not used (a call waiting state), folding force stronger than the folding force F1 is applied to the main body portion A such that the main surface 1A of the upper housing portion 1 faces the main surface 2A of the lower housing portion 2, and the metal member 6B of the belt member 6 is engaged with the engaging portion 4M, which makes it possible to keep the main body portion A folded. When the main body portion A is folded, a curved portion 4F of the fashion cover B is little bent while approaching the third connecting member 33, and the edge winding member 4C is inclined toward the upper and lower housing portions 1 and 2. Therefore, the projected area of the main body portion in the vertical direction with respect to the main surfaces 1A and 2A of the upper and lower housing portions 1 and 2 is reduced to the minimum, and thus the folding mobile phone is handy to carry.

In the folded state of the main body portion A, the thinnest portion (the concave portion) 33B of the third connecting member 33 expands (see Fig. 13), and the central portion of the second connecting member 32 corresponding to the connecting portion 3A is flattened. In this case, force to release the expanding state is applied to the thinnest portion 33B of the third connecting member 33, and force to restore the flat state to the curved state is applied to the central portion 128 of the second connecting member 32. However, as described above, since the metal member 6B provided in the belt member 6 of the first connecting member 31 of the fashion cover B is engaged with the engaging portion 4M, the folded state of the main body portion A is maintained.

Next, an operation of mounting the fashion cover B to the main body portion A will be described below in detail with reference to Figs. 11 and 13.

As shown in Figs. 11 and 13, first, the upper housing portion 1 of the main body portion A is stuck on the upper-housing-portion rear surface portion 4D of the fashion cover B. Then, the fashion cover B is extended in the direction of arrow T such that the curved portion 4F is substantially flattened. The extended state in the direction of arrow T is represented by a two-dotted chain line. The fashion cover B is moved in a direction opposite to the direction of arrow T while engaging the engaging claws 4G formed on the cell cover 4E of the fashion cover B with the grappling claws 2E formed on the main body portion A, thereby mounting the fashion cover B to the main body portion A.

As another method, the upper housing portion 1 of the main body portion A is stuck on the upper-housing-portion rear surface portion 4D of the fashion cover B, and the main body portion A is further bent in the direction of arrow P. Then, an extra length corresponding to the movement of the fashion cover B in the direction of arrow T is ensured. Subsequently, as described above, the fashion cover B is moved in a direction opposite to the direction of arrow T while engaging the engaging claws 4G with the grappling claws 2E formed on the main body portion A, thereby mounting the fashion cover B to the main body portion A.

In this way, the fashion cover B can be easily attached or detached to or from the main body portion A by providing the curved portion 4F in the fashion cover B or expanding the connecting device 3. This operating method is very simple.

When the main body portion A is completely mounted to the fashion cover B, the edge winding portion 4C protrudes from the edge of the main body portion A, and the inner surface of the base member 4A can cover the rear surface (a surface opposite to the main surface 1A) of the upper housing portion 1, and the rear surface (a surface opposite to the main surface 2A) of the lower housing portion 2, without any gap therebetween.

Further, the cell cover portion 4E of the fashion cover B is detachably mounted to the main body portion A. The fashion cover B (or the cell) may be detached from the main body portion A in the reverse order of the mounting operation.

As described above, in the conventional structure, the upper and lower housing portions rotate on the central axis of the hinge device. In contrast, in this embodiment of the invention, two housing portions are connected to each other by a bendable connecting device. In addition, in this embodiment, the connecting device 3 does not protrude from the main surface 1A of the upper housing portion 1 and the main surface 2A of the lower housing portion 2. Therefore, even when a user having a long fingernail operates the operating unit 22, the user's fingernail does not come into contact with the connecting device 3.

Further, according to this embodiment, since the conventional hinge device is not used, it is possible to provide the connecting device 3 having a small volume and size. In order to keep the upper and lower housing portions open, the connecting device 3 includes the second connecting member 32 having an arc-shaped cross section. More specifically, when the main body portion A is unfolded, the second connecting member 32 is arranged with the center of the arc facing the main surface 1A of the upper housing portion 1 (or the main surface 2A of the lower housing portion 2). As a result, the second connecting member 32 is formed in a strip shape that does not occupy much space and has a small thickness and size, and can stably keep the main body portion A unfolded. Therefore, this structure makes it possible to stably perform various operations and to prevent operationality from being lowered.

Furthermore, according to this embodiment, the first connecting member 31 continuously connects the upper and lower housing portions 1 and 2. Therefore, it is possible to obtain unity between the upper and lower housing portions 1 and 2. In addition, the structure of detachably mounting the fashion cover B to the upper housing portion 1 (the same structure as that of the cell cover) makes it possible for the user to freely replace the fashion cover B according to his or her preference, and thus it is possible to provide a folding mobile phone according to the user's preference. Of course, when the fashion cover B is contaminated, the fashion cover B may be detached and washed. Therefore, it is possible to keep the fashion cover B clean.

In recent years, there has been developed a folding mobile phone having a second display unit that is exposed to the outer surface and displays predetermined information, such as received information and time information, even when the folding mobile phone is folded. However, in this embodiment, the second display unit is not provided in the main body portion A.

In this embodiment, the second display unit can also be provided in, for example, the rear surface 1B of the upper housing portion 1. That is, for example, a transparent portion may be provided at a position of the fashion cover B corresponding to the second display unit such that the user can view, for example, characters from the outside, or a third opening may be formed.

In order to prevent a third party from seeing the second display unit, for example, an openable cover may be formed to cover the transparent portion or the third opening portion. When the user views the second display unit, the user may take off the cover to confirm displayed information.

The housing portions and the connecting device (the sheet-shaped member and the bendable member) of the invention are not limited to the upper and lower housing portions 1 and 2 and the first to third connecting members 31 to 33 of the above-mentioned embodiment. For example, the following structure may be used: first connector terminals for connection to electronic parts are provided on the bottoms of two housing portions, serving as units; a bendable member, an antenna, and a flexible wiring member (for example, a flexible substrate) are provided in the sheet-shaped member; second connector terminals for connection to the first connector terminals are provided on the sheet-shaped member; and when the rear surfaces of the two housing portions are fixed to the sheet-shaped member, the first and second connector terminals are connected to each other.

In this embodiment, the fashion cover B can be detached from the main body portion A. However, the following structure may be used: the fashion cover and the second connecting member are integrally formed, and the second connecting member is detached from the main body portion.

Further, in this embodiment, the main body portion A is unfolded in a straight line (at an angle of 180°). However, in the unfolded state of the main body portion A, the second connecting member 32 may be mounted in a flat state, with the upper housing portion and the lower housing portion being arranged at an angle smaller than 180°. In addition, the second connecting member 32 may be formed at a predetermined angle, or it may be mounted to the main body portion A in a curved state such that the main body portion A is unfolded at an arbitrary angle smaller than 180°.

Furthermore, in the above-mentioned embodiment, a spring member is used for the second connecting member in order to reliably keep the main body portion unfolded. However, when a proper degree of stability is satisfied, a spring obtained by bending a steel sheet at a predetermined angle may be used for the second connecting member. Since strong stress is applied to the spring having an arc shape in sectional view, the spring member may be used for a folding mobile phone whose folding or unfolding life span does not matter.
The invention is not limited to the above-mentioned embodiment, but various modifications and changes of the invention can be made without departing from the scope of the invention.

While the invention has been described in terms of various specific and preferred embodiments, the skilled persons will appreciate that various modifications and changes can be made without departing from the spirit and scope of the invention.
This application claims the benefit of Japanese patent application Nos. 2003-371759, filed on October 31, 2003, 2004-133463, filed on April 28, 2004, and 2004-133462, filed on April 28, 2004, the entire disclosures of which are incorporated herein by reference.

### Industrial Applicability

According to the present invention, a connecting device has a structure capable of bending and connecting two housing portions without using a hinge device. The connecting device makes it possible to keep the two housing portions unfolded at a predetermined angle. In addition, the connecting device makes it possible to allow one of the two housing portions to be bent in a direction, but to prevent it from being bent in the opposite direction thereof. The connecting device of the invention can be applied for connecting portions, that is, hinge portions, of small foldable electronic apparatuses, such as a mobile phone, a PDA, a portable PC, and a notebook PC having a light weight.

### Reference Numerals

- A:: MAIN BODY PORTION
- B:: FASHION COVER
- 1:: UPPER HOUSING PORTION
- 1A:: MAIN SURFACE
- 1B:: REAR SURFACE
- 1C:: SIDE SURFACE
- 1D:: INNER SURFACE
- 101:: MAIN BODY PORTION
- 107:: DISPLAY UNIT
- 108:: PERMANENT MAGNET
- 11:: EARPIECE (RECEIVER)
- 112:: CAMERA UNIT
- 113:: HALL ELEMENT
- 12:: SPEAKER
- 126:: WINDOW FRAME
- 127:: TRANSPARENT PORTION
- 128:: CENTRAL PORTION
- 13:: DISPLAY UNIT
- 13A:: WINDOW FRAME
- 13B:: TRANSPARENT PORTION
- 14:: PERMANENT MAGNET
- 15:: FIRST PRINTED BOARD
- 2:: LOWER HOUSING PORTION
- 2A:: MAIN SURFACE
- 2B:: REAR SURFACE
- 2C:: SIDE SURFACE
- 2D:: INNER SURFACE
- 2E:: GRAPPLING CLAW
- 21:: MOUTHPIECE (MICROPHONE)
- 22:: OPERATING UNIT
- 23:: VIBRATOR UNIT
- 24:: CAMERA UNIT
- 25:: HALL ELEMENT
- 26:: CELL
- 27:: SECOND PRINTED BOARD
- 270:: CONTROL UNIT
- 271:: TRANSMITTING/RECEIVING UNIT
- 272:: DATA CONVERTING UNIT
- 273:: VOICE PROCESSING UNIT
- 274:: IMAGE PROCESSING UNIT
- 275:: INFORMATION STORAGE UNIT
- 3:: CONNECTING DEVICE
- 3A:: CONNECTING PORTION
- 31:: SHEET-SHAPED MEMBER, FIRST CONNECTING MEMBER
- 31A:: FLANGE PORTION
- 32:: BENDABLE MEMBER, SECOND CONNECTING MEMBER
- 320:: THROUGH HOLE
- 321:: SCREW
- 322:: BOSS
- 323:: CURVED PORTION
- 324:: SPHERICAL PORTION
- 325:: R PORTION
- 326:: STOPPER
- 321:: STOPPER
- 33:: THIRD CONNECTING MEMBER
- 33A:: THIN PORTION
- 33B:: THINNEST PORTION
- 331,: 331A, 331B: TAPPING SCREW
- 332,: 332A, 332B: HOLE
- 34:: ANTENNA
- 34A:: POWER SUPPLY PORTION
- 35:: FLEXIBLE WIRING MEMBER
- 35A,: 35B: CONNECTOR
- 4:: APPEARANCE PORTION
- 4A:: FIRST OPENING
- 4B:: SECOND OPENING
- 4C:: ENGAGING PORTION
- 5:: FRAME MAIN BODY (FASHION COVER)
- 5A:: SLIT
- 51:: EDGE HOLDING PORTION
- 6:: BELT MEMBER
- 6A:: HOOK
- 6B:: METAL MEMBER
- C:: CONVEX PORTION

## Claims

1. A connecting device comprising:
a sheet-shaped member having flexibility on which two housing portions are fixed at a predetermined gap; and
a bendable member which has enough restoring force and rigidity to restore a bent state to an unbent state and is attached to the sheet-shaped member so as to be laid across the two housing portions.

2. The connecting device according to claim 1,
wherein the bendable member is a thin plate having an arc shape in sectional view.

3. The connecting device according to claim 2,
wherein the bendable member is attached to the two housing portions, with a concave portion thereof oriented in a direction where the two housing portions are folded.

4. The connecting device according to any one of claims 1 to 3,
wherein the sheet-shaped member has a folding force generating means for generating folding force to hold the folded state of the housing portions at a substantially central region thereof corresponding to the gap between the two housing portions.

5. The connecting device according to any one of claims 1 to 4,
wherein the sheet-shaped member includes a stopper that is bent to temporarily hold the folded state of the two housing portions.

6. A small electronic apparatus comprising:
two housing portions; and
the connecting device according to any one of claims 1 to 5 that foldably connects the two housing portions.

7. The small electronic apparatus according to claim 6, further comprising;
a display unit that is provided in one of the two housing portions; and
an operating unit that is provided in the other housing portion,
wherein, when the two housing portions are in a folded state, the display unit and the operating unit are arranged opposite to each other.

8. A folding portable terminal apparatus comprising:
a connecting member that has flexibility and connects two housing portions with a predetermined gap interposed therebetween;
a bendable member which has enough restoring force and rigidity to restore a bent state to an unbent state and is attached so as to be laid across the two housing portions; and
a flexible wiring member which electrically connects the two housing portions,
wherein the bendable member and the flexible wiring member overlap each other at the position of the connecting member.

9. The folding portable terminal apparatus according to claim 8,
wherein the bendable member has a curved portion having a concave shape in sectional view.

10. The folding portable terminal apparatus according to claim 9,
wherein the flexible wiring member is arranged on the concave side of the curved portion.

11. The folding portable terminal apparatus according to claim 9,
wherein the flexible wiring member is arranged on the convex side of the curved portion.

12. A folding portable terminal apparatus comprising:
a connecting member that has flexibility and connects two housing portions with a predetermined gap interposed therebetween;
a permanent magnet which is provided at one end of one of the two housing portions facing the other housing portion; and
a Hall element which detects the magnetic field of the permanent magnet and is provided at one end of the other housing portion facing the one housing portion so as to opposite to the permanent magnet when the two housing portions are positioned to face each other.

13. A folding portable terminal apparatus comprising:
a fashion cover that covers outer surfaces of two housing portions and a connecting portion for foldably connecting two housing portions and is freely replaceable,
wherein screw receiving portions are provided so as to protrude from the inner surface of a portion of the fashion cover covering one of the two housing portions,
a plurality of engaging claws are arranged on the inner surface of the other portion of the fashion cover covering the other housing portion of the two housing portions such that leading ends thereof face in the opposite direction of the one housing portion,
grappling claws engaged with the engaging claws are provided on the other housing portion so as to correspond to the engaging claws, and
after the screw receiving portions are screwed to the one housing portion, the fashion cover is relatively extended to the other housing portion to engage the engaging claws with the grappling claws, thereby mounting the fashion cover.

14. A folding portable terminal apparatus comprising:
a fashion cover that covers outer surfaces of two housing portions and a connecting portion for foldably connecting two housing portions and is freely replaceable,
wherein the fashion cover includes:
a base member which has a size larger than the two housing portions connected to each other by the connecting portion; and
an integument which covers at least an outer surface of the base member,
the base member has an edge winding portion that protrudes from the edge of the two housing portions to the outside, and
the edge winding portion is deformable so as to be inclined toward the two housing portions.

15. A folding portable terminal apparatus comprising:
a fashion cover that covers outer surfaces of two housing portions and a connecting portion for foldably connecting two housing portions and is freely replaceable,
wherein the fashion cover includes:
a belt member which is provided at one end of an outer surface of the fashion cover;
a first metal member which is provided at a leading end of the belt member;
a second metal member which is provided at the other end of the outer surface of the fashion cover and engages with the first metal member; and
a permanent magnet which is provided on at least one of the first and second metal members to magnetically couple the first and second metal members, and
the first metal member and the second metal member respectively have concave and convex portions engaged with each other.

16. A folding portable terminal apparatus comprising:
a connecting member which has flexibility and connects two housing portions with a predetermined gap interposed therebetween;
a bendable member which has enough restoring force and rigidity to restore a bent state to an unbent state and is attached so as to be laid across the two housing portions; and
a base member which has an integument on a surface thereof,
wherein the base member is mounted to the two housing portions, with a rear surface thereof separated from the connecting member.

## Amended claims

### Amended claims under Art. 19.1 PCT

1. Deleted)

2. (Deleted)

3. (Deleted)

4. (Deleted)

5. (Deleted)

6. (Deleted)

7. (Deleted)

8. A folding portable terminal apparatus comprising:
a connecting member that has flexibility and connects two housing portions with a predetermined gap interposed therebetween;
a bendable member which has enough restoring force and rigidity to restore a bent state to an unbent state and is attached so as to be laid across the two housing portions; and
a flexible wiring member which electrically connects the two housing portions,
wherein the bendable member and the flexible wiring member overlap each other at the position of the connecting member.

9. The folding portable terminal apparatus according to claim 8,
wherein the bendable member has a curved portion having a concave shape in sectional view.

10. The folding portable terminal apparatus according to claim 9,
wherein the flexible wiring member is arranged on the concave side of the curved portion.

11. The folding portable terminal apparatus according to claim 9,
wherein the flexible wiring member is arranged on the convex side of the curved portion.

12. A folding portable terminal apparatus comprising:
a connecting member that has flexibility and connects two housing portions with a predetermined gap interposed therebetween;
a permanent magnet which is provided at one end of one of the two housing portions facing the other housing portion; and
a hall element which detects the magnetic field of the permanent magnet and is provided at one end of the other housing portion facing the one housing portion so as to opposite to the permanent magnet when the two housing portions are positioned to face each other.

13. A folding portable terminal apparatus comprising:
a fashion cover that covers outer surfaces of two housing portions and a connecting portion for foldably connecting two housing portions and is freely replaceable,
wherein screw receiving portions are provided so as to protrude from the inner surface of a portion of the fashion cover covering one of the two housing portions,
a plurality of engaging claws are arranged on the inner surface of the other portion of the fashion cover covering the other housing portion of the two housing portions such that leading ends thereof face in the opposite direction of the one housing portion,
grappling claws engaged with the engaging claws are provided on the other housing portion so as to correspond to the engaging claws, and
after the screw receiving portions are screwed to the one housing portion, the fashion cover is relatively extended to the other housing portion to engage the engaging claws with the grappling claws, thereby mounting the fashion cover.

14. A folding portable terminal apparatus comprising:
a fashion cover that covers outer surfaces of two housing portions and a connecting portion for foldably connecting two housing portions and is freely replaceable,
wherein the fashion cover includes:
a base member which has a size larger than the two housing portions connected to each other by the connecting portion; and
an integument which covers at least an outer surface of the base member,
the base member has an edge winding portion that protrudes from the edge of the two housing portions to the outside, and
the edge winding portion is deformable so as to be inclined toward the two housing portions.

15. A folding portable terminal apparatus comprising:
a fashion cover that covers outer surfaces of two housing portions and a connecting portion for foldably connecting two housing portions and is freely replaceable,
wherein the fashion cover includes:
a belt member which is provided at one end of an outer surface of the fashion cover;
a first metal member which is provided at a leading end of the belt member;
a second metal member which is provided at the other end of the outer surface of the fashion cover and engages with the first metal member; and
a permanent magnet which is provided on at least one of the first and second metal members to magnetically couple the first and second metal members, and
the first metal member and the second metal member respectively have concave and convex portions engaged with each other.

16. A folding portable terminal apparatus comprising:
a connecting member which has flexibility and connects two housing portions with a predetermined gap interposed therebetween;
a bendable member which has enough restoring force and rigidity to restore a bent state to an unbent state and is attached so as to be laid across the two housing portions; and
a base member which has an integument on a surface thereof,
wherein the base member is mounted to the two housing portions, with a rear surface thereof separated from the connecting member.
